# EUROPEAN PATENT APPLICATION

(11) **EP 4 647 886 A1**
(43) Date of publication of application: **12.11.2025**
(21) Application number: 25706613.4
(22) Date of filing: 21.02.2025
(51) Int. Cl.: G06F 3/0484, G06F 3/0481, G06V 30/10, G06N 20/00, G06N 3/02

(54) **ELECTRONIC APPARATUS INCLUDING FLEXIBLE DISPLAY AND CONTROL METHOD THEREFOR**

(30) Priority: 20.03.2024 KR 20240038427; 23.04.2024 KR 20240053905
(71) Applicant: Samsung Electronics Co., Ltd., Suwon-si, Gyeonggi-do 16677 (KR)
(72) Inventor: CHOI, Jinug, Suwon-si, Gyeonggi-do 16677 (KR); SHIN, Huijong, Suwon-si, Gyeonggi-do 16677 (KR); YOON, Byounguk, Suwon-si, Gyeonggi-do 16677 (KR); CHANG, Seho, Suwon-si, Gyeonggi-do 16677 (KR); CHOI, Wonsun, Suwon-si, Gyeonggi-do 16677 (KR)
(74) Representative: Appleyard Lees IP LLP
(86) International application number: PCT/KR2025/002468
(87) International publication number: WO 2025/198198

(57) **Abstract**

An electronic device is disclosed. An electronic device of the disclosure may include a foldable housing including a first housing part including a first side and a second side opposite the first side, a second housing part including a third side and a fourth side opposite the third side, and a third housing part including a fifth side and a sixth side opposite the fifth side, a first hinge structure rotatably connecting the first housing part and the second housing part, a second hinge structure rotatably connecting the first housing part and the third housing part, a first display including a first display area disposed on the first side of the first housing part, a second display area disposed on the third side of the second housing part, and a third display area disposed on the fifth side of the third housing part, a second display disposed on at least one of the second side of the first housing part or the fourth side of the second housing part, a sensor module including sensor circuitry, at least one processor, and memory storing instructions, wherein the instructions, when executed by the at least one processor individually or collectively, cause the electronic device to, in a first state in which the electronic device is folded, display an execution screen of a first application through the second display based on a user input, detect, while the execution screen of the first application is displayed through the second display, that a state of the electronic device is changed from the first state to a second state, based on a sensing value of the sensor module, display, based on detecting that a state of the electronic device is changed from the first state to the second state, an application list related to the first application through at least one area of the first display, receive a user input for selecting at least one application from the application list, and display, based on detecting that a state of the electronic device is changed from the second state to a third state, an execution screen of at least one application on the entire area of the first display in a layout corresponding to the at least one application.

## Description

### [Technical Field]

Embodiments of the disclosure relate to an electronic device including a flexible display and a method for controlling same.

### [Background Art]

Various services and additional functions provided through an electronic device, for example, a mobile electronic device such as a smartphone have been increased. Communication service providers or electronic device manufacturers competitively develop an electronic device for providing various functions and differentiation from other businesses to improve effective values of such electronic device and satisfy various desires of users. Therefore, various functions provided through electronic devices have been increasingly advanced.

In recent years, various types of electronic devices providing a more extended screen by means of multiple displays have been developed. For example, the inclusion of multiple displays provides an extended screen of multiple displays.

Electronic devices may have a form factor such as a multiple display (e.g., a dual display) device (e.g., a foldable device). The foldable device may include a foldable (or bendable) display (e.g., a foldable display) or a flexible display and may be folded or unfolded to be used. In addition, depending on implementation types of multiple displays, the need for development of user interfaces (UI) corresponding to multiple displays and operation thereof is increasing.

The above-described information may be provided as a related art to help understanding of the disclosure. No claim or determination is made as to the applicability of any of the foregoing as prior art to the disclosure.

### [Detailed Description of the Invention]

### [Technical Solution]

According to an embodiment, an electronic device includes a foldable housing including a first housing part including a first side and a second side opposite the first side, a second housing part including a third side and a fourth side opposite the third side, and a third housing part including a fifth side and a sixth side opposite the fifth side, a first hinge structure rotatably connecting the first housing part and the second housing part, a second hinge structure rotatably connecting the first housing part and the third housing part, a first display including a first display area disposed on the first side of the first housing part, a second display area disposed on the third side of the second housing part, and a third display area disposed on the fifth side of the third housing part, a second display disposed on at least one of the second side of the first housing part or the fourth side of the second housing part, a sensor module including sensor circuitry, at least one processor, and memory configured to store instructions, when executed by the at least one processor individually or collectively, causing the electronic device to perform operations.

The instructions , when executed by the at least one processor individually or collectively, cause the electronic device to, in a first state in which the electronic device is folded, display an execution screen of a first application through the second display based on a user input.

The instructions , when executed by the at least one processor individually or collectively, cause the electronic device to, while the execution screen of the first application is displayed on the second display, detect that a folding state of the electronic device is changed from the first state to a second state, based on a sensing value of the sensor module.

The instructions, when executed by the at least one processor individually or collectively, cause the electronic device to, based on detecting that a folding state of the electronic device is changed from the first state to the second state, display an application list related to the first application through at least one area of the first display.

The instructions, when executed by the at least one processor individually or collectively, cause the electronic device to receive a user input for selecting at least one application from the application list.

The instructions, when executed by the at least one processor individually or collectively, cause the electronic device to, based on detecting that a folding state of the electronic device is changed from the second state to a third state, display an execution screen of the at least one application on the entire area of the first display in a layout corresponding to the at least one application.

The first state may be a fully-folded state or a prism state, the second state may be a partially-folded state and the third state may be a fully-unfolded state. In the fully-folded state, the electronic device may be completely folded. In the prism state, the first hinge structure and second hinge structure may be folded to have a predetermined angle therebetween. In the partially-folded state, one of the first hinge structure and the second hinge structure may be folded, and the other of the first hinge structure and the second hinge structure may be unfolded. In the fully-unfolded state, the first hinge structure and the second hinge structure may be unfolded. In the partially-folded state, a partial area of the first display may be activated, and in the fully-unfolded state, the entire area of the first display may be activated.

According to an embodiment, a method for controlling an electronic device including a foldable housing including a first housing part including a first side and a second side opposite the first side, a second housing part including a third side and a fourth side opposite the third side, and a third housing part including a fifth side and a sixth side opposite the fifth side, a first display including a first display area disposed on the first side of the first housing part, a second display area disposed on the third side of the second housing part, and a third display area disposed on the fifth side of the third housing part, and a second display disposed on at least one of the second side of the first housing part or the fourth side of the second housing part includes an operation of displaying an execution screen of a first application on the second display based on a user input in a first state in which the electronic device is folded.

The method for controlling the electronic device includes an operation of detecting, while the execution screen of the first application is displayed through the second display, that a folding state of the electronic device is changed from the first state to a second state, based on a sensing value of a sensor module of the electronic device.

The method for controlling the electronic device includes an operation of displaying, based on detecting that a folding state of the electronic device is changed from the first state to the second state, an application list related to the first application through at least one area of the first display.

The method for controlling the electronic device includes an operation of receiving a user input for selecting at least one application from the application list.

The method for controlling the electronic device includes an operation of displaying, based on detecting that a folding state of the electronic device is changed from the second state to a third state, an execution screen of the at least one application on the entire area of the first display in a layout corresponding to the at least one application.

An embodiment provides a non-transitory computer readable recording medium storing at least one program, wherein the at least one program includes instructions causing an electronic device including a foldable housing including a first housing part including a first side and a second side opposite the first side, a second housing part including a third side and a fourth side opposite the third side, and a third housing part including a fifth side and a sixth side opposite the fifth side, a first display including a first display area disposed on the first side of the first housing part, a second display area disposed on the third side of the second housing part, and a third display area disposed on the fifth side of the third housing part, and a second display disposed on at least one of the second side of the first housing part or the fourth side of the second housing part to display an execution screen of a first application through the second display based on a user input in a first state in which the electronic device is folded.

The at least one program includes instructions causing the electronic device to detect, while the execution screen of the first application is displayed through the second display, that a folding state of the electronic device is changed from the first state to a second state, based on a sensing value of a sensor module of the electronic device.

The at least one program includes instructions causing the electronic device to display, based on detecting that a folding state of the electronic device is changed from the first state to the second state, an application list related to the first application through at least one area of the first display.

The at least one program includes instructions causing the electronic device to receive a user input for selecting at least one application from the application list.

The at least one program includes instructions causing the electronic device to display, based on detecting that a state of the electronic device is changed from the second state to a third state, an execution screen of the at least one application on the entire area of the first display in a layout corresponding to the at least one application.

### [Brief Description of Drawings]

FIG. 1 is a block view of an electronic device in a network environment according to an embodiment.
FIG. 2A is a perspective view illustrating a state in which an electronic device is unfolded according to an embodiment.
FIG. 2B is a perspective view illustrating a state in which an electronic device is unfolded according to an embodiment.
FIG. 3 is a perspective view illustrating a state in which an electronic device is folded according to an embodiment.
FIG. 4A is a view illustrating a state in which an electronic device is partially folded according to an embodiment.
FIG. 4B is a view illustrating a state in which an electronic device is partially folded according to an embodiment.
FIG. 5 is a view illustrating an electronic device folded in a different manner from FIGS. 3 and 4A.
FIG. 6 is a flowchart illustrating an operation of displaying, on a flexible display, an execution screen of at least one application related to an execution screen of an application displayed on a cover display according to unfolding of an electronic device according to an embodiment.
FIG. 7A is a view illustrating an operation of displaying, on a flexible display, an execution screen of at least one application related to an execution screen of an application displayed on a cover display according to unfolding of an electronic device according to an embodiment.
FIG. 7B is a view illustrating an operation of displaying, on a flexible display, an execution screen of at least one application related to an execution screen of an application displayed on a cover display according to unfolding of an electronic device according to an embodiment.
FIG. 8 is a view illustrating an operation of displaying a list for selecting a type and a layout of an execution screen of at least one application related to an execution screen of an application displayed on a cover display according to unfolding of an electronic device according to an embodiment.
FIG. 9A is a view illustrating an execution screen of at least one application displayed on a flexible display according to unfolding of an electronic device according to an embodiment.
FIG. 9B is a view illustrating an execution screen of at least one application displayed on a flexible display according to unfolding of an electronic device according to an embodiment.
FIG. 9C is a view illustrating an execution screen of at least one application displayed on a flexible display according to unfolding of an electronic device according to an embodiment.
FIG. 9D is a view illustrating an execution screen of at least one application displayed on a flexible display according to unfolding of an electronic device according to an embodiment.
FIG. 10 is a view illustrating an operation of displaying a list for selecting a type and a layout of an execution screen of at least one application related to an execution screen of an application displayed on a cover display according to unfolding of an electronic device according to an embodiment.
FIG. 11 is a view illustrating an operation of displaying a list for selecting at least one application related to an execution screen of an application displayed on a cover display according to unfolding of an electronic device according to an embodiment.
FIG. 12 is a view illustrating an operation of displaying, on a flexible display, an execution screen of an application identical to an execution screen of an application displayed on a cover display according to unfolding of an electronic device according to an embodiment.
FIG. 13 is a view illustrating an operation of displaying a guidance message on a flexible display according to unfolding of an electronic device in case that a harmful content is included in an execution screen of an application displayed on a cover display according to an embodiment.
FIG. 14A is a view illustrating an operation of predicting an action of a user based on a content of an execution screen of an application displayed on a cover display of an electronic device according to an embodiment.
FIG. 14B is a view illustrating an operation of determining function selection and arrangement based on the action of the user which has been predicted in FIG. 14A of the electronic device according to an embodiment.
FIG. 15 is a view illustrating an operation of determining an arrangement of execution screens of a plurality of applications of an electronic device according to an embodiment.
FIG. 16 is a view illustrating an operation of displaying, on a flexible display, an execution screen of at least one application related to an execution screen of an application displayed on a cover display according to unfolding of an electronic device according to an embodiment.
FIG. 17 is a view illustrating an operation of displaying, on a flexible display, an execution screen of at least one application related to an execution screen of an application displayed on a cover display according to unfolding of an electronic device according to an embodiment.
FIG. 18 is a view illustrating an operation of displaying, on a flexible display, an execution screen of at least one application related to an execution screen of an application displayed on a cover display according to unfolding of an electronic device according to an embodiment.
FIG. 19 is a view illustrating an operation of displaying, on a flexible display, an execution screen of at least one application related to an execution screen of an application displayed on a cover display according to unfolding of an electronic device according to an embodiment.
FIG. 20 is a view illustrating an operation of displaying, on a flexible display, an execution screen of at least one application related to an execution screen of an application displayed on a cover display according to unfolding of an electronic device according to an embodiment.
FIG. 21 is a view illustrating an operation of displaying, on a flexible display, an execution screen of at least one application related to an execution screen of an application displayed on a cover display according to unfolding of an electronic device according to an embodiment.
FIG. 22 is a view illustrating an operation of displaying, on a flexible display, an execution screen of at least one application related to an execution screen of an application displayed on a cover display according to unfolding of an electronic device according to an embodiment.
FIG. 23 is a view illustrating an operation of displaying, on a flexible display, an execution screen of at least one application related to an execution screen of an application displayed on a cover display according to unfolding of an electronic device according to an embodiment.
FIG. 24 is a view illustrating an operation of displaying, on a flexible display, an execution screen of at least one application related to an execution screen of an application displayed on a cover display according to unfolding of an electronic device according to an embodiment.
FIG. 25 is a view illustrating an operation of displaying, on a flexible display, an execution screen of at least one application related to an execution screen of an application displayed on a cover display according to unfolding of an electronic device according to an embodiment.
FIG. 26 is a view illustrating an operation of displaying, on a flexible display, an execution screen of at least one application related to an execution screen of an application displayed on a cover display according to unfolding of an electronic device according to an embodiment.

### [Mode for Carrying out the Invention]

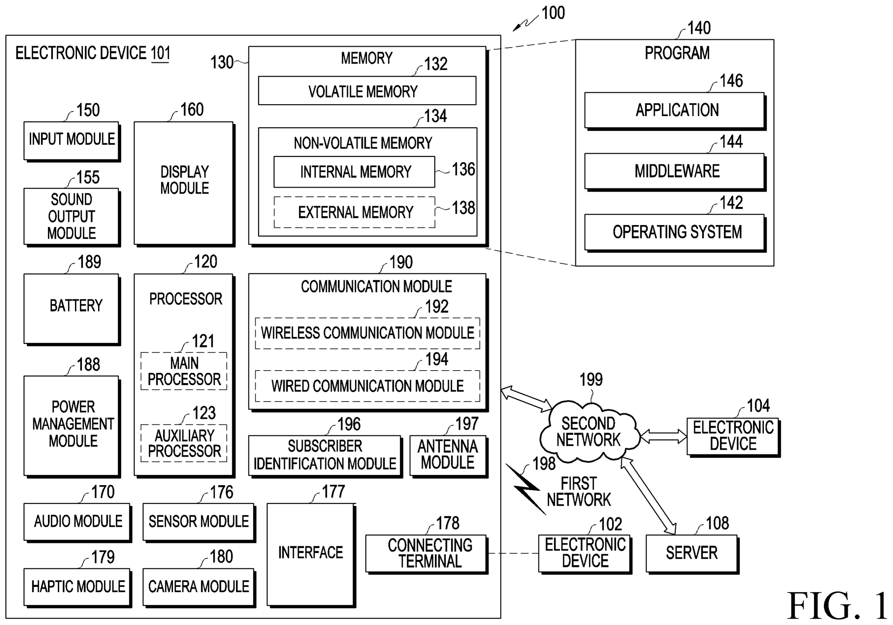

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor. According to an embodiment, the sensor module 176 may include a sensor circuitry. According to an embodiment, the sensor module 176 may include a first sensor, a second sensor, or a third sensor. According to an embodiment, the sensor circuitry may include a first sensor, a second sensor, or a third sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

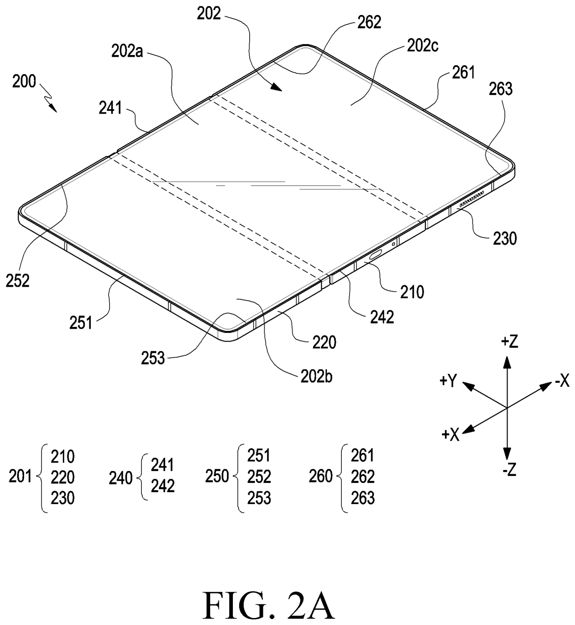

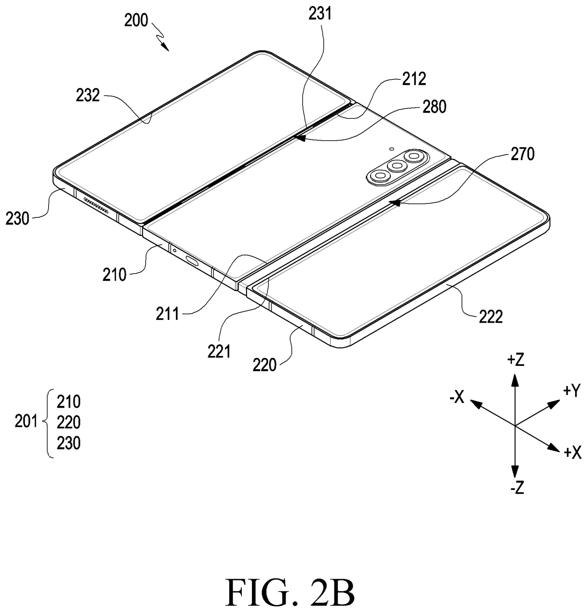

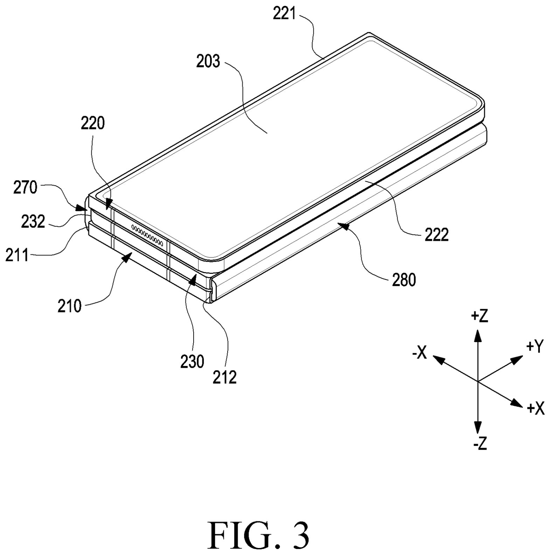

FIG. 2A is a perspective view illustrating a state in which an electronic device 200 is unfolded according to an embodiment of the disclosure. FIG. 2B is a perspective view illustrating a state in which an electronic device 200 is unfolded according to an embodiment of the disclosure. FIG. 2A is an oblique view of one side (e.g., a front side) of the electronic device 200 and FIG. 2B is an oblique view of the other side (e.g., a rear side) of the electronic device 200. Components described with reference to FIGS. 2A and 2B may be entirely or partially identical to the components described with reference to FIG. 1. Components described with reference to FIGS. 2A and 2B may be entirely or partially identical to components to be described with reference to FIGS. 3 to 26.

According to an embodiment, the electronic device 200 may include a housing 201. The electronic device 200 may include a display 202. The housing 201 may define a space in which the display 202 is disposed. The display 202 may include a flexible display 202. At least a portion of the display 202 may be folded or unfolded.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably connected to the first housing 210. The third housing 230 may be rotatably connected to the first housing 210. The display 202 may be exposed through a first portion of the first housing 210, a second portion of the second housing 220, and a third portion of the third housing 230. The display 202 may include a first display area 202a corresponding to the first housing 210, a second display area 202b corresponding to the second housing 220, and a third display area 202c corresponding to the third housing 230.

According to an embodiments, the electronic device 200 may include a support 240, 250, 260. The support 240, 250, 260 may be disposed between the housing 201 and the display 202. The support 240, 250, 260 may be coupled to the housing 201 and may support the display 202. The support 240, 250, 260 may be disposed to surround an edge of the display 202. The support 240, 250, 260 may extend along a circumference of the housing 201. The support 240, 250, 260 may include a first support 240 disposed in the first housing 210, a second support 250 disposed in the second housing 220, and a third support 260 disposed in the third housing 230. The support 240, 250, 260 may be referred to as a "body". The support 240, 250, 260 may be referred to as a "frame". The support 240, 250, 260 may be referred to as a "sealing member". The support 240, 250, 260 may be referred to as a "peripheral part". The support 240, 250, 260 may be referred to as a "circumferential part". The support 240, 250, 260 may be referred to as a "peripheral structure". The support 240, 250, 260 may be referred to as a "circumferential structure".

According to an embodiments, the support 240, 250, 260 may include the first support 240. The first support 240 may be disposed between the first housing 210 and the display 202. The first support 240 may be disposed along an edge of the first housing 210. The first support 240 may include a (1-1)th support 241 and a (1-2)th support 242. At least a portion of the display 202 may be disposed between the (1-1)th support 241 and the (1-2)th support 242. The (1-1)th support 241 may be disposed in one end portion of the first housing 210, and the (1-2)th support 242 may be disposed in the other end portion of the first housing 210. Each of the first, second, and third supports 240, 250, and 260 may be referred to as a "support". The support 240, 250, 260 may include a non-conductive member. The support 240, 250, 260 may be referred to as a "deco" or a "finishing member" or a "non-conductive member".

According to an embodiments, the support 240, 250, 260 may include the second support 250. The second support 250 may be disposed between the second housing 220 and the display 202. The second support 250 may be disposed along an edge of the second housing 220. The second support 250 may include a (2-1)th support 251, a (2-2)th support 252, and a (2-3)th support 253. At least a portion of the display 202 may be disposed between the (2-2)th support 252 and the (2-3)th support 253. The (2-1)th support 251 may connect the (2-2)th support 252 and the (2-3)th support 253. The (2-1)th support 251 may extend along an edge (e.g., an edge 222 in FIG. 2B) of the second housing 220. The (2-1)th support 251 may be disposed between the edge 222 of the second housing 220 and the display 202. The (2-1)th support 251 may be referred to as a "support frame" or a "first support frame". Each of the (2-2)th support 252 and the (2-3)th support 253 may be referred to as a "second support frame".

According to an embodiments, the support 240, 250, 260 may include the third support 260. The third support 260 may be disposed between the third housing 230 and the display 202. The third support 260 may be disposed along an edge of the third housing 230. The third support 260 may include a (3-1)th support 261, a (3-2)th support 262, and a (3-3)th support 263. At least a portion of the display 202 may be disposed between the (3-2)th support 262 and the (3-3)th support 263. The (3-1)th support 261 may connect the (3-2)th support 262 and the (3-3)th support 263. The (3-1)th support 261 may extend along an edge (e.g., an edge 232 in FIG. 2B) of the third housing 230. The (3-1)th support 261 may be disposed between the edge 232 of the third housing 230 and the display 202. The (3-1)th support 261 may be referred to as a "support frame" or a "first support frame". Each of the (3-2)th support 262 and the (3-3)th support 263 may be referred to as a "second support frame".

According to an embodiment, the first housing 210 may include a (1-1)th side portion 211 and a (1-2)th side portion 212. The (1-1)th side portion 211 and the (1-2)th side portion 212 each may form opposite lateral sides of the first housing 210. The second housing 220 may be coupled to the (1-1)th side portion 211. The third housing 230 may be coupled to the (1-2)th side portion 212. The (1-1)th side portion 211 may be referred to as a "first coupling portion". The (1-2)th side portion 212 may be referred to as a "second coupling portion". The (1-1)th side portion 211 may be referred to as a "first portion". The (1-2)th side portion 212 may be referred to as a "second portion".

According to an embodiment, the second housing 220 may include a (2-1)th side portion 221 and a (2-2)th side portion 222. The (2-1)th side portion 221 and the (2-2)th side portion 222 each may form opposite lateral sides of the second housing 220. The (2-1)th side portion 221 may be connected to the first housing 210. The (2-2)th side portion 222 may form a lateral side of the housing 201. The (2-2)th side portion 222 may be referred to as an "edge". The (2-1)th side portion 221 may be referred to as a "third side portion". The (2-2)th side portion 222 may be referred to as a "fourth side portion".

According to an embodiment, the electronic device 200 may include a second display 203, which may be referred to as a cover display. The second housing 220 may configure a space in which the cover display 203 is disposed. The cover display 203 may be disposed in the second housing 220. For example, the cover display 203 may be disposed between the (2-1)th side portion 221 and the (2-2)th side portion 222. The cover display 203 may be a flat display.

According to an embodiment, one side of the second housing 220 may surround an edge of a portion of the display 202 and the other side thereof may surround an edge of the cover display 203. The electronic device 200 may include an internal space of the second housing 220, which is formed by the second housing 220 surrounding same, the second housing 220 including one side corresponding to the cover display 203, the other side parallel to the one side corresponding to a portion of the display 202, and a lateral side including the (2-1)th side portion 221 and the (2-2)th side portion 222.

According to an embodiment, a camera may be disposed on an area of the cover display 203.

According to an embodiment, the third housing 230 may include a (3-1)th side portion 231 and a (3-2)th side portion 232. The (3-1)th side portion 231 and the (3-2)th side portion 232 each may form opposite lateral sides of the third housing 230. The (3-1)th side portion 231 may be connected to the first housing 210. The (3-2)th side portion 232 may form a lateral side of the housing 201. The (3-2)th side portion 232 may be referred to as an "edge". The (3-1)th side portion 231 may be referred to as a "fifth side portion". The (3-2)th side portion 232 may be referred to as a "sixth side portion".

According to an embodiment, a second cover display may be further disposed in a space formed by the third housing 230. For example, the second cover display may be disposed between the (3-1)th side portion 231 and the (3-2)th side portion 232. The second cover display may be a flat display.

According to an embodiment, the electronic device 200 may include a first hinge 270 and a second hinge 280. The first hinge 270 may be disposed between the first housing 210 and the second housing 220. The first hinge 270 may be disposed between the (1-1)th side portion 211 and the (2-1)th side portion 221. The first hinge 270 may rotatably connect the first housing 210 and the second housing 220. The second hinge 280 may be disposed between the first housing 210 and the third housing 230. The second hinge 280 may be disposed between the (1-2)th side portion 212 and the (3-1)th side portion 231. The second hinge 280 may rotatably connect the first housing 210 and the third housing 230. The first hinge 270 may be referred to as a "first hinge member". The second hinge 280 may be referred to as a "second hinge member".

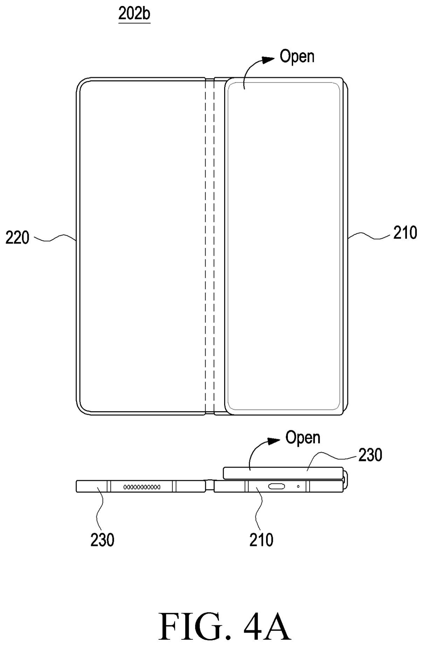

FIG. 3 is a perspective view illustrating a state in which an electronic device 200 is folded according to an embodiment of the disclosure. Components to be described with reference to FIG. 3 may be entirely or partially identical to components having been described with reference to FIGS. 1 to 2B. Components to be described with reference to FIG. 3 may be entirely or partially identical to components to be described with reference to FIGS. 4A to 26.

According to an embodiment, the second housing 220 may be rotatable with respect to the first housing 210. The first hinge 270 may be provided at the rotation center of the second housing 220. The first hinge 270 may connect the (1-1)th side portion 211 and the (2-1)th side portion 221. The third housing 230 may be rotatable with respect to the first housing 210. The second hinge 280 may be provided at the rotation center of the third housing 230. The second hinge 280 may connect the (1-2)th side portion 212 and the (3-1)th side portion 231.

According to an embodiment, in a state in which the electronic device 200 is folded, each of the first, second, and third housings 210, 220, and 230 may be arranged in one direction (e.g., the +Y direction). For example, in FIG. 3, the third housing 230 may be disposed on an upper side of the first housing 210 and the second housing 220 may be disposed on an upper side of the third housing 230. For example, the third housing 230 may be disposed between the first housing 210 and the second housing 220.

According to an embodiment, when the flexible display 202 is viewed from a screen display direction (e.g., the +Z direction), the edge 222 of the second housing 220 may correspond to an area of the second housing 220 in which a screen of the flexible display 202 overlaps a portion which is not seen from the outside of the housing (e.g., the second housing 220). For example, the edge 222 of the second housing 220 may include a bezel portion of the second housing 220.

According to an embodiment, a portion of the second housing 220 seen from the outside may further include the cover display 203. For example, the cover display 203 may be disposed between the (2-1)th side portion 221 and the (2-2)th side portion 222. The cover display 203 may correspond to a flat display.

A width of the first hinge 270 may be greater than that of the second hinge 280. For example, a length that the first hinge 270 extends in the +Z direction may be greater than a length that the second hinge 280 extends in the +Z direction.

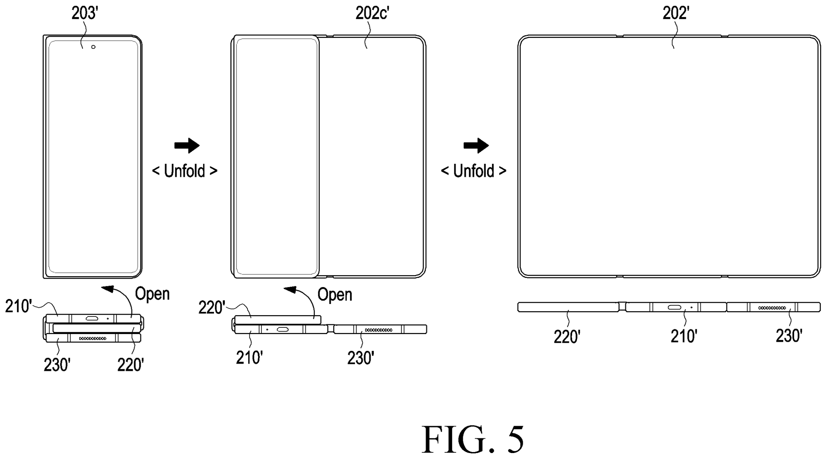

FIG. 4A is a view illustrating a state in which an electronic device is partially folded according to an embodiment. Components to be described with reference to FIG. 4A may be entirely or partially identical to components having been described with reference to FIGS. 1 to 3. Components to be described with reference to FIG. 4A may be entirely or partially identical to components to be described with reference to FIGS. 5 to 26. FIG. 4A may illustrate a half-folded state of the electronic device 200 in which only one hinge (e.g., the second hinge 280) is completely folded and another hinge (e.g., the first hinge 270) is completely unfolded.

According to an embodiment, the third housing 230 may be rotatable with respect to the first housing 210. The second hinge 280 may be provided at the rotation center of the third housing 230. As shown in FIG. 4A, in case that the second hinge 280 is completely folded, the third housing 230 may be disposed on the upper side of the first housing 210.

According to an embodiment, the second housing 220 may be rotated with respect to the first housing 210. The first hinge 270 may be provided at the rotation center of the second housing 220. As shown in FIG. 4A, in case that the first hinge 270 is completely unfolded, the second housing 220 may be disposed in plane with the first housing 210.

According to an embodiment, in case that the third housing 230 is disposed on the upper side of the third housing 210 and the second housing 220 is disposed in plane with the first housing 210, only the second display area 202b of the display 202, which is disposed in the second housing may be exposed to the outside and a rear side of the third housing 230 on which no display 202 is disposed may be exposed to the outside.

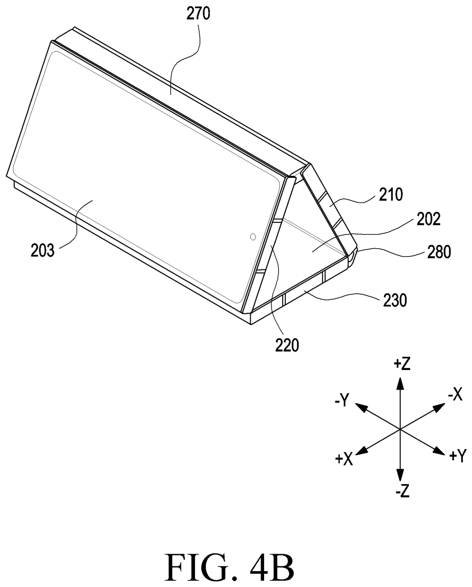

FIG. 4B is a view illustrating a prism state according to an embodiment. Components to be described with reference to FIG. 4B may be entirely or partially identical to components having been described with reference to FIGS. 1 to 4A. Components to be described with reference to FIG. 4B may be entirely or partially identical to components to be described with reference to FIGS. 5 to 26. FIG. 4B may illustrate a semi-folded state of the electronic device 200 in which a plurality of hinges (e.g., the first hinge 270 and the second hinge 280) are folded to have an angle within a predetermined range. For example, the state in which a plurality of hinges are folded to have an angle within a predetermined range may be referred to as a prism state. According to an embodiment, as shown in FIG. 4B, a state in which the plurality of hinges of the electronic device in the prism state are arranged in parallel with the bottom side may be referred to as a prism flex. According to an embodiment, a state in which the plurality of hinges of the electronic device in the prism state are arranged perpendicular to the bottom side may be referred to as a prism stand.

As shown in FIG. 4B, in case that the first hinge 270 which provides a rotation center to the second housing 220 with respect to the first housing 210 is folded to have an angle within a predetermined range and the second hinge 280 which provides a rotation center to the third housing 230 with respect to the first housing 210 is folded to have an angle within a predetermined range, the first housing 210, the second housing 220, and the third housing 230 may form a triangle in the +Y direction and/or -Y direction.

According to an embodiment, the display 202 may be folded to have a triangular pillar-shaped space and the cover display 203 may be disposed to outwards. According to an embodiment, a side of the third housing 230, on which the display 202 is not disposed, may contact surface.

FIG. 5 is a view illustrating another example electronic device folded in a different manner from FIGS. 3 and 4A.

The electronic device 200 shown in FIG. 5 differs from the electronic device 200 shown in figure 2A in that the cover display 203' is provided in the first housing 210' and the width of the second hinge 280' is greater than the width of the first hinge 270'. For example, in a fully folded state of FIG. 5, the second housing 220' may be disposed on an upper side of the third housing 230' and the first housing 210' may be disposed on an upper side of the second housing 220'. For example, in a fully folded state of FIG. 5, the second housing 220' may be disposed between the first housing 210' and the third housing 230'.

In FIG. 5, after a primary unfolding, the electronic device may be in a half-folded state in which one hinge (e.g., the first hinge) is completely folded and another hinge (e.g., the second hinge) is completely unfolded. For example, the primary unfolding may indicate unfolding of the second hinge.

In FIG. 5, according to an embodiment, the second housing 220' may be rotatable with respect to the first housing 210'. The first hinge may be provided at the rotation center of the second housing 220'. As shown in FIG. 5, in case that the first hinge is completely folded, the second housing 220' may be disposed on the upper side of the first housing 210'. In FIG. 5, according to an embodiment, the third housing 230' may be rotatable with respect to the first housing 210'. The second hinge may be provided at the rotation center of the third housing 230'. As shown in FIG. 5, in case that the second hinge is completely unfolded, the third housing 230' may be disposed in plane with the first housing 210'. In FIG. 5, according to an embodiment, in case that the second housing 220' is disposed on the upper side of the first housing 210' and the third housing 230' is disposed in plane with the first housing 210', only the third display area 202c' of the display 202', which is disposed in the third housing may be exposed to the outside and a rear side of the second housing 220' may be exposed to the outside.

In FIG. 5, after a secondary unfolding, the electronic device shown in FIG. 5 may be in a fully-unfolded state in which two hinges are completely unfolded. For example, the secondary unfolding may indicate unfolding of the first hinge while the second hinge is unfolded.

In FIG. 5, according to an embodiment, in a state in which the electronic device is fully unfolded, the first housing 210', the second housing 220', and the third housing 230' may be arranged in plane and the entirety of the display 202' may be exposed to the outside.

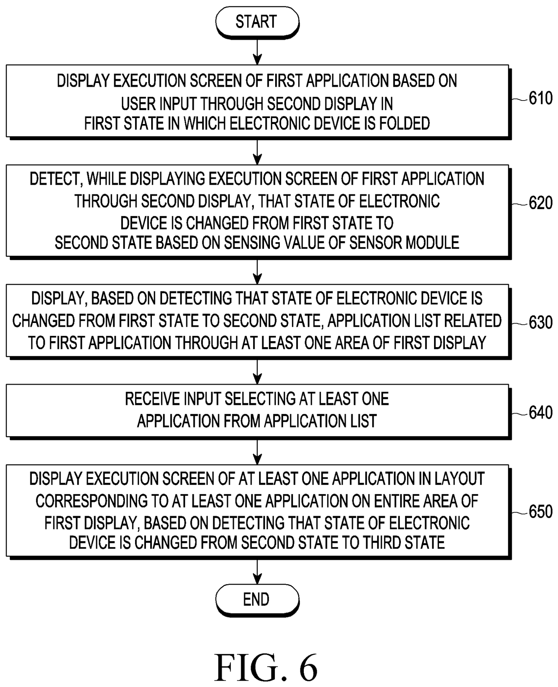

FIG. 6 is a flowchart illustrating an operation of displaying, on a flexible display, an execution screen of at least one application related to an execution screen of an application displayed on a cover display according to unfolding of an electronic device according to an embodiment.

Referring to FIG. 6, in operation 610, the electronic device (e.g., the electronic device 101 in FIG. 1, the processor 120 in FIG. 1, the electronic device 200 in FIG. 2A, or the electronic device 200 in FIG. 5) may display an execution screen of a first application based on a user input through a second display in a first state in which the electronic device is folded.

According to an embodiment, the electronic device may identify a folding state of the electronic device, based on a sensing value of a first sensor, a sensing value of a second sensor, and/or a sensing value of a third sensor.

According to an embodiment, the first sensor may be disposed in a first housing and may include an inertial sensor, an acceleration sensor, and/or a Hall sensor capable of detecting a direction, rotation, and/or folding of the first housing. According to an embodiment, the second sensor may be disposed in a second housing and may include an inertial sensor, an acceleration sensor, and/or a Hall sensor capable of detecting a direction, rotation, and/or folding of the second housing. According to an embodiment, the third sensor may be disposed in a third housing and may include an inertial sensor, an acceleration sensor, and/or a Hall sensor capable of detecting a direction, rotation, and/or folding of the third housing.

According to an embodiment, the electronic device may obtain, based on the directions and/or rotation degrees of the first housing, the second housing and the third housing, an angle between the first housing and the second housing and an angle between the first housing and the third housing. According to an embodiment, the electronic device may identify, based on the angle between the first housing and the second housing and the angle between the first housing and the third housing, a folding state of the electronic device.

According to an embodiment, at least one of the first sensor, the second sensor, or the third sensor may include a Hall sensor and/or proximity sensor capable of detecting a distance between the first housing and the second housing and a Hall sensor and/or proximity sensor capable of detecting a distance between the first housing and the third housing. According to an embodiment, the electronic device may identify, based on the distance between the first housing and the second housing and the distance between the first housing and the third housing, a folding state of the electronic device.

According to an embodiment, in case that the folding state of the electronic device corresponds to a first state in which a second display (or a cover display) (e.g., the display module 160 in FIG. 1 or the cover display 203 in FIG. 2B) is activated, the electronic device may display an execution screen of an application on the cover display based on a user input.

According to an embodiment, the first state with the cover display activated may be the fully-folded state in which the electronic device is completely folded as shown in FIG. 3 or 5 or the prism state in which a plurality of hinges are folded to have a predetermined angle therebetween as shown in FIG. 4B.

According to an embodiment, the electronic device may display the execution screen of an application on the cover display based on a user input in the first state in which the cover display is activated. For example, the electronic device may display, based on a user input selecting an icon displayed on the cover display, an execution screen of a message application, a camera application, a photo album application, a note application, or a browser application on the cover display. According to an embodiment, the electronic device may display a notification on the cover display according to reception of a new message, and display an execution screen of a message application on the cover display based on a user input selecting the notification.

According to an embodiment, in operation 620, the electronic device may detect, while the execution screen of the first application is displayed through the second display, that a folding state of the electronic device is changed from the first state to a second state, based on a sensing value of a sensor module (e.g., the sensor module 176 in FIG. 1). For example, in a state in which the execution screen of the first application is displayed on the cover display, the electronic device may detect a folding state of the electronic device, based on at least one of the first sensor, the second sensor, or the third sensor.

According to an embodiment, the state in which an execution screen of an application is displayed on the cover display may indicate that the folding state of which the electronic device corresponds to the fully-folded state or the prism state, and the electronic device may detect that the folding state of the electronic device is changed from the fully-folded state or the prism state.

According to an embodiment, the electronic device may detect that the folding state of the electronic device corresponds to the fully-folded state or the prism state and the folding state of the electronic device is changed while a message, note, or browser screen and/or an image is displayed on the cover display.

According to an embodiment, in operation 630, the electronic device may display, based on detecting that the folding state of the electronic device has changed from the first state to the second state, an application list related to the first application through at least one area of the first display (or a flexible display) (e.g., the display module 160 in FIG. 1 or the display 202 in FIG. 2A). According to an embodiment, the second state may correspond to a state in which a partial area of the flexible display is activated.

According to an embodiment, the plurality of applications in the list may be related to contents included in the execution screen of the first application. For example, the electronic device may identify, based on detecting the change of the folding state of the electronic device, the plurality of applications related to the contents by using an analysis result of the contents (e.g., texts, image files, audio files, and/or video files) included in the execution screen of the application.

According to an embodiment, in case that texts are included in the execution screen of the application displayed on the cover display, such as a message, note, or browser, the electronic device may analyze the included texts and identify a plurality of related applications.

According to an embodiment, in case that an image is included in the execution screen of the application displayed on the cover display, such as a note including handwriting, an image including handwriting, or an image including text, the electronic device may perform character recognition on the image and obtain text data. According to an embodiment, the electronic device may analyze the text data obtained through character recognition and identify a plurality of related applications.

According to an embodiment, memory may further include a first artificial intelligence (AI) model trained to obtain, by using texts included in the execution screen of the application as input data, contexts and keywords of the texts as output data.

According to an embodiment, the electronic device may analyze a plurality of actions, based on the contexts and keywords obtained through the first artificial intelligence model. According to an embodiment, the electronic device may identify a plurality of applications related to the plurality of actions, respectively.

According to an embodiment, in case that the first artificial intelligence model is stored in a sever, the electronic device may transfer the texts included in the execution screen of the application to the server and predict a plurality of actions, based on the contexts and keywords received from the server as an analysis result. According to an embodiment, the electronic device may obtain a plurality of actions obtained based on the contexts and keywords as an analysis result of the server.

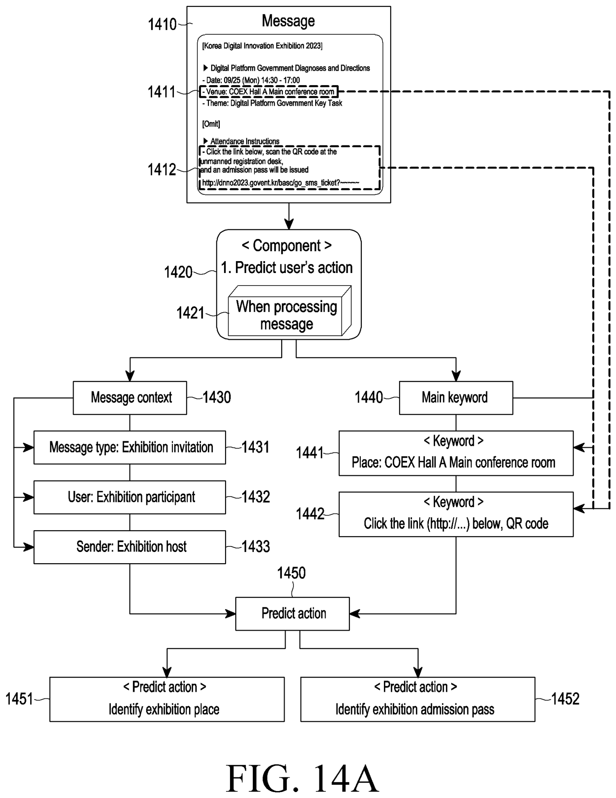

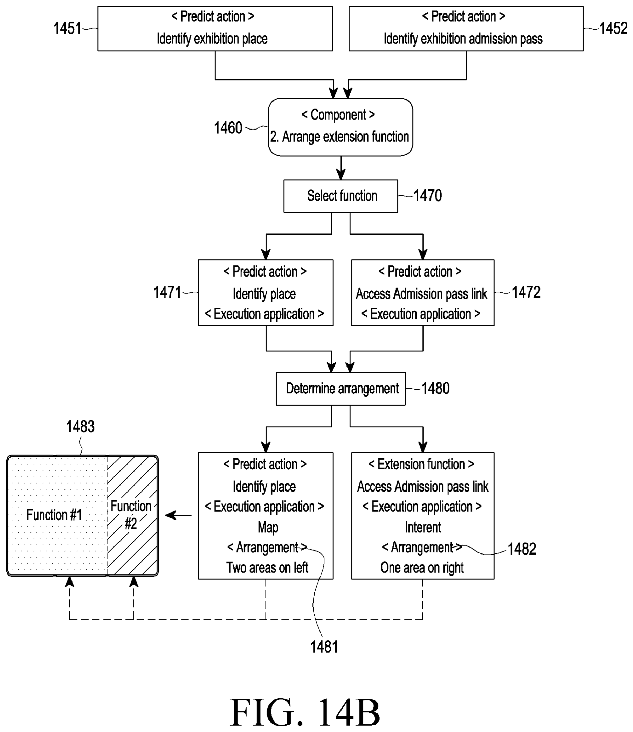

According to an embodiment, an operation of identifying of the plurality of applications based on the texts will be described in detail with reference to FIGS. 14A and 14B below.

According to an embodiment, the plurality of applications may be identified by further considering at least one of a time at which a folding state of the electronic device is changed, a location of the electronic device, or whether the electronic device has moved. For example, the electronic device may identify different applications depending on at least one of a time at which a folding state of the electronic device is changed, a position when the folding state of the electronic device is changed, or whether the electronic device moves when the folding state of the electronic device is changed.

According to an embodiment, based on identifying that the folding state of the electronic device is changed from the first state to the second state, the electronic device may display a list including a plurality of applications on an activated partial area.

According to an embodiment, the electronic device may identify that the folding state of the electronic device is changed from a first state corresponding to the fully-folded state or the prism state to a second state in which a partial area of the flexible display is activated, as shown in FIG. 4A or 5.

According to an embodiment, in case that a plurality of applications are identified in relation to one of the plurality of actions, the electronic device may identify a priority of the plurality of applications related to the one action based on a usage history of the plurality of applications related to the one action. According to an embodiment, the electronic device may include an application having a highest priority in the list. For example, in case that a plurality of applications are identified in relation to the predicted action of the user, the electronic device may include, in the list, an application frequently used by the user in relation to the corresponding action.

According to an embodiment, the electronic device may obtain a plurality of groups including at least one application among a plurality of applications. According to an embodiment, the electronic device may display a list allowing selection of one group among the plurality of groups. For example, the electronic device may display a plurality of application lists respectively corresponding to a plurality of predicted actions of the user and generate one group of applications corresponding to at least some of a plurality of predicted actions to display a list including a plurality of groups. According to an embodiment, predicted actions of each group may be the same, partially different, or entirely different. According to an embodiment, even when predicted actions of each group are partially identical, applications corresponding to the identical predicted action may be different.

According to an embodiment, the electronic device may identify a plurality of applications by further considering at least one a time at which a folding state of the electronic device is changed from the first state to the second state, a position of the electronic device when the folding state of the electronic device is changed, or whether the electronic device moves when the folding state of the electronic device is changed. According to an embodiment, the electronic device may display a list including different types of applications, based on a time and a position of the electronic device when the folding state of the electronic device is changed, or whether the electronic device moves.

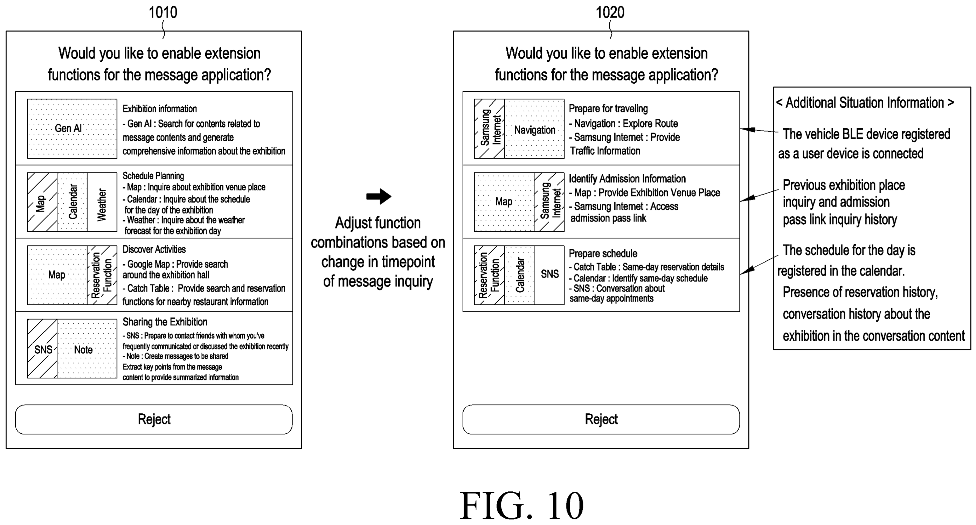

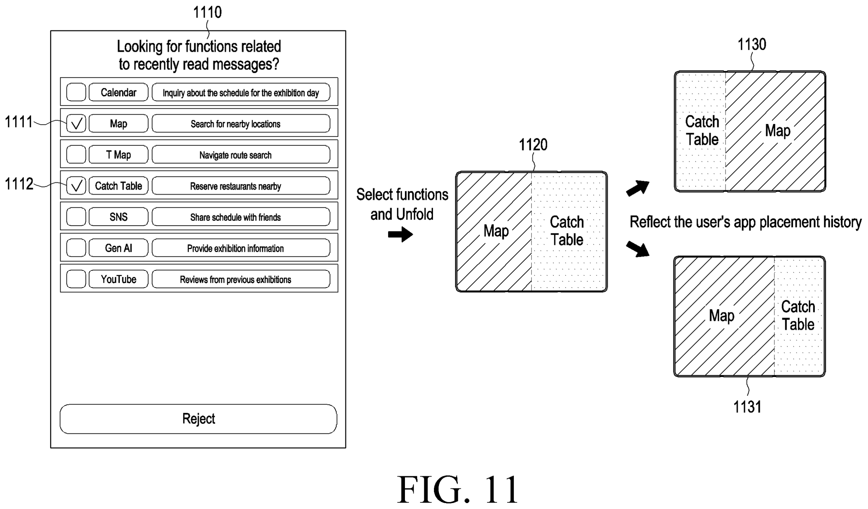

According to an embodiment, the operation of providing, based on an identical analysis result, different lists as a condition change when the folding state is changed will be described in detail with reference to FIGS. 10 and 11 below.

According to an embodiment, the list including a plurality of groups each including a plurality of applications may include a plurality of layouts related to an arrangement of an execution screen of at least one application included in each of the plurality of groups. For example, the electronic device may display a list including not only types of applications but also layouts of execution screens of the applications.

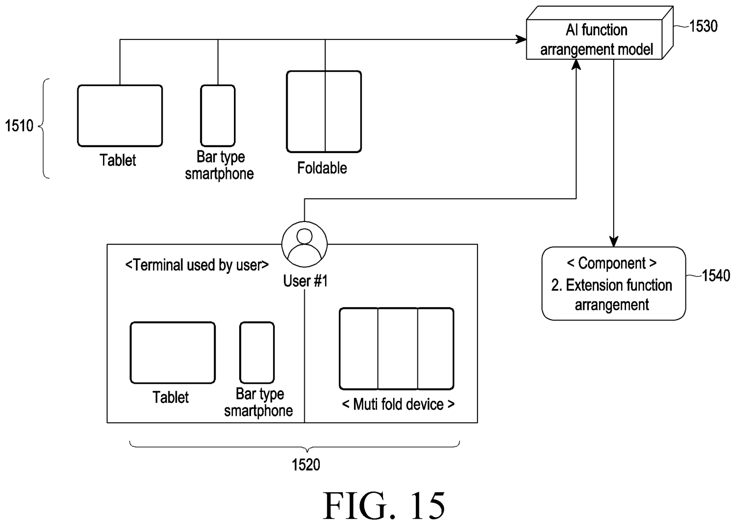

According to an embodiment, the memory may further include a second artificial intelligence model trained to obtain a plurality of layouts as output data by using the plurality of applications as input data. According to an embodiment, the plurality of layouts obtained through the second artificial intelligence model may be displayed in the list. According to an embodiment, the operation of obtaining the layouts through the artificial intelligence model will be described in detail with reference to FIG. 15 below.

According to an embodiment, in case that the second artificial intelligence model is stored in a server, the electronic device may transfer information of the plurality of applications to the server and receive the plurality of layouts as an analysis result from the server. According to an embodiment, the electronic device may display the plurality of layouts in a list.

According to an embodiment, the electronic device may identify the plurality of layouts through a usage history of the plurality of applications. For example, the electronic device may display a list including the plurality of layouts determined through the usage history. According to an embodiment, the electronic device may determine, in case that only the plurality of applications are included in the list, layouts through a usage history of selected applications.

According to an embodiment, the operation of determining layouts of a plurality of applications based on a user's multi-window usage history will be described in detail with reference to FIG. 11 below.

According to an embodiment, in operation 640, the electronic device may receive a user input selecting an item in the application list. For example, the electronic device may receive a user input selecting at least one application among the application list. When the selected item corresponds to an application, selecting the item may comprise selecting the application. When the selected item corresponds to a group of applications, selecting an item may comprise selecting the group of applications.

According to an embodiment, in case that only a plurality of applications are included in the application list, the electronic device may select at least one application through a user input.

According to an embodiment, in case that a plurality of groups each including at least one application are included in the application list, the electronic device may select at least one application included in a selected group through a user input.

According to an embodiment, in operation 650, the electronic device may display, based on detecting that a folding state of the electronic device is changed from the second state to a third state, an execution screen of the selected at least one application on the entire area of the first display in a layout corresponding to the at least one application. According to an embodiment, the third state may correspond to a state in which the entire area of the first flexible display (or the flexible display) is activated.

According to an embodiment, the third state in which the entire area of the flexible display is activated may correspond to a state in which the electronic device is completely unfolded as shown in FIG. 2A or 5.

According to an embodiment, in case that only a plurality of applications are included in the application list, the electronic device may determine, based on an artificial intelligence model or a usage history, a layout of the execution screen of the at least one application selected based on a user input.

According to an embodiment, in case that a layout of each group and groups each including at least one application are included in a plurality of lists, the electronic device may display an execution screen of at least one application in a selected layout.

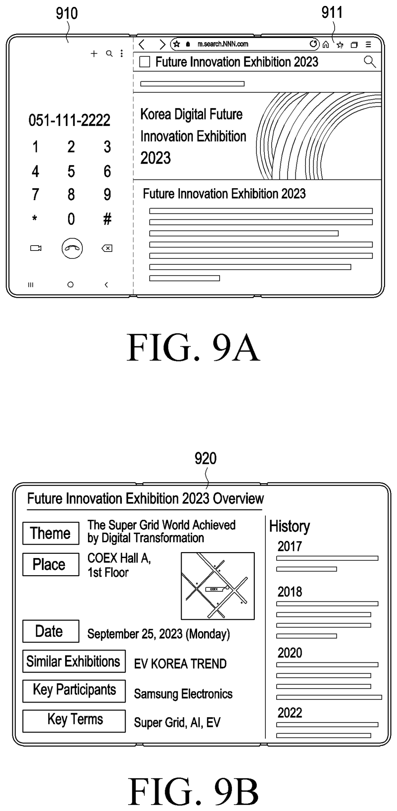

According to an embodiment, the operation of displaying an execution screen of at least one application on the entire area of the flexible display will be described in detail with reference to FIGS. 9A to 9D below.

According to an embodiment, each application may be executed based on a user input and may include a software development kit (SDK) for executing extended functions in each application to execute each application through another application. According to an embodiment, the electronic device may execute related applications based on SDK communication.

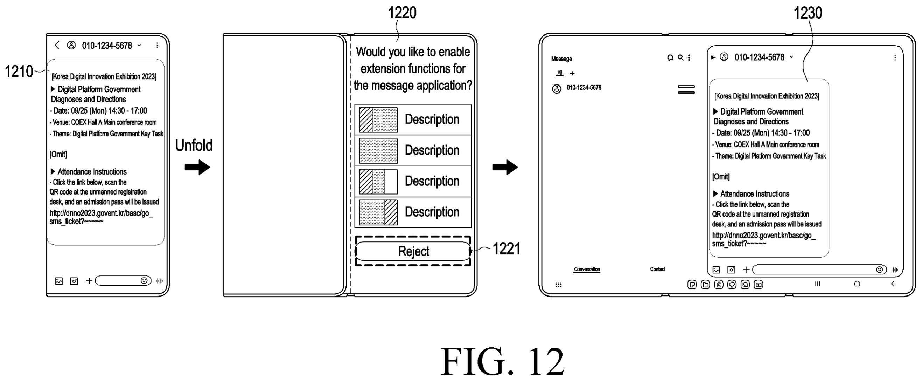

According to an embodiment, the list may include a user-selectable button for rejecting the display of at least one application related to the execution screen of the application displayed on the cover display. According to an embodiment, in case that the button is selected through the list, the electronic device may display, on the flexible display, the execution screen of the application displayed on the cover display not the execution screen of at least one application related to the execution screen of the application displayed on the cover display. According to an embodiment, the operation of displaying, on the entire area of the flexible display, the execution screen of the application displayed on the cover display will be described in detail with reference to FIG. 12 below.

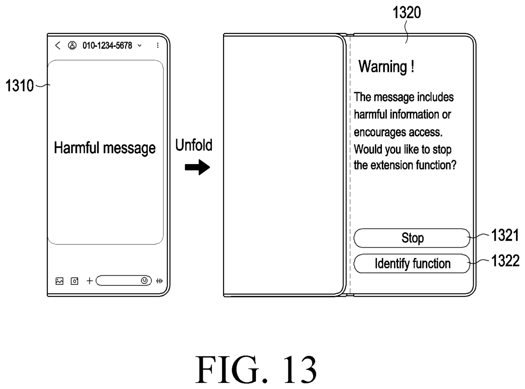

According to an embodiment, in case that a harmful content is included in the execution screen of the application displayed on the cover display, the electronic device may display a message notifying that a harmful content is included instead of the list. According to an embodiment, the operation in case that a harmful content is included in the execution screen of the application displayed on the cover display will be described in detail with reference to FIG. 13 below.

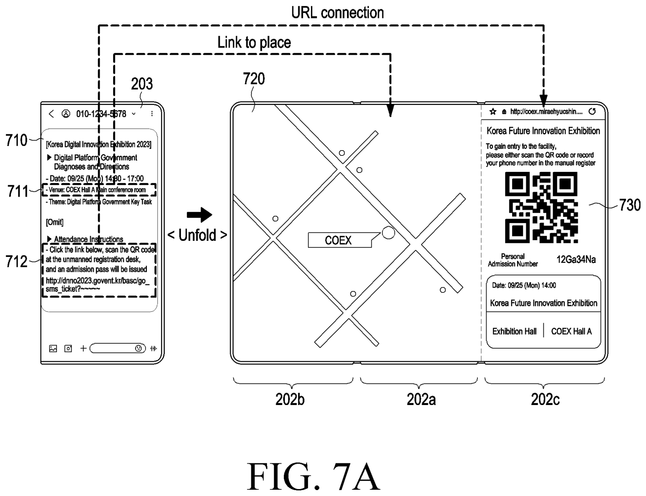

FIG. 7A is a view illustrating an operation of displaying, on a flexible display, an execution screen of at least one application related to an execution screen of an application displayed on a cover display according to unfolding of an electronic device according to an embodiment.

Referring to FIG. 7A, the electronic device (e.g., the electronic device 101 in FIG. 1, the processor 120 in FIG. 1, the electronic device 200 in FIG. 2A, or the electronic device 200 in FIG. 5) may display an execution screen 710 of an application in the fully-folded state or the prism state in which the cover display 203 (e.g., the cover display 203 in FIG. 2B) of the electronic device is activated. For example, the execution screen 710 of the application may correspond to an execution screen of a message application.

According to an embodiment, the electronic device may analyze, in case that a change of the folding state of the electronic device is identified, texts included in the execution screen 710 of the application. According to an embodiment, the electronic device may identify, based on an analysis result of the texts, a plurality of applications related to partial texts 711 and 712.

According to an embodiment, in case that the folding state of the electronic device changes to the fully-unfolded state in which the entire area of the flexible display is activated, the electronic device may display the execution screens 720 and 730 of the identified plurality of applications on the entire area of the flexible display.

For example, the electronic device may display, in response to an analysis result of texts included in as message, an execution screen 720 of a map application corresponding to a text 711 in a first area including place information within the message on a first display area 202a and a second display area 202b of the flexible display. According to an embodiment, the electronic device may display the execution screen 720 of the map application related to the place information within the message.

According to an embodiment, the electronic device may display, on a third display area 202c of the flexible display, a browser execution screen 730 corresponding to a text 712 of a second area including ticket URL information within the message. According to an embodiment, the electronic device may display the browser execution screen 730 related to the ticket URL information within the message.

As such, in case that the flexible display corresponding to the main display is activated while the cover display is activated, the electronic device may provide a screen desired by the user by additionally displaying execution screens of applications related to a screen shown through the cover display, without performing operations of copying a portion of a message content, executing an application, and moving the portion to a desired screen and without displaying the screen shown through the cover display on the flexible display as it is or displaying a home screen.

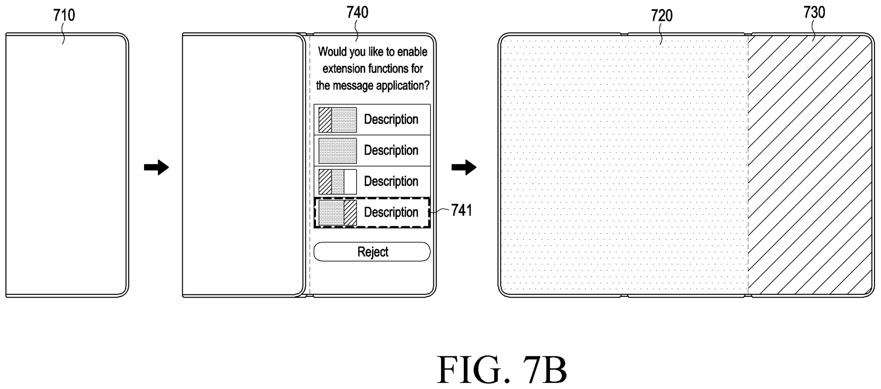

FIG. 7B is a view illustrating an operation of displaying, on a flexible display, an execution screen of at least one application related to an execution screen of an application displayed on a cover display according to unfolding of an electronic device according to an embodiment.

Referring to FIG. 7B, the electronic device may display the execution screen 710 of the application in the fully-folded state or the prism state in which the cover display of the electronic device is activated. For example, the execution screen 710 of the application may correspond to an execution screen of a message application.

According to an embodiment, the electronic device may analyze, in case that a change of the folding state of the electronic device is identified, texts included in the execution screen 710 of the application. According to an embodiment, the electronic device may identify, based on an analysis result of the texts, a plurality of applications related to partial texts.

According to an embodiment, the electronic device may display a list 740 related to a plurality of applications on a partial area of the activated flexible display in a state in which the partial area of the flexible display is activated. According to an embodiment, the list 740 may include only the plurality of applications or a plurality of layouts related to an arrangement of the plurality of applications.

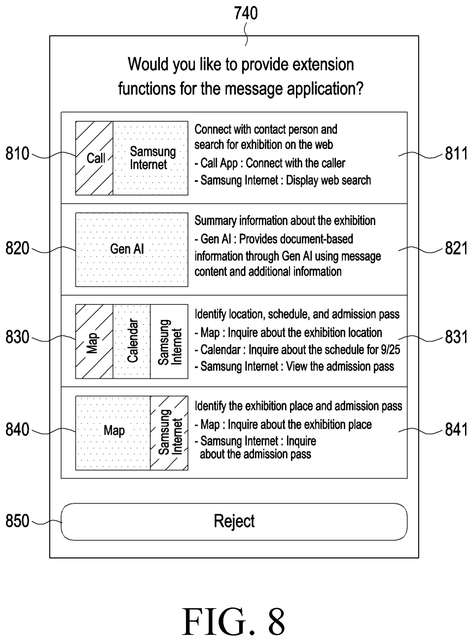

According to an embodiment, the electronic device may receive a user input selecting at least one application or an item 741 related to a combination of at least one application and a layout through the list 740. According to an embodiment, specific information included in the list 740 will be described in detail with reference to FIGS. 8, 10, and 11 below.

According to an embodiment, in case that the folding state of the electronic device is changed to a state in which the entire area of the flexible display is activated after receiving the user input, an execution screen 720 or 730 of at least one application corresponding to the selected at least one application or the item 741 may be displayed.

FIG. 8 is a view illustrating an operation of displaying a list for selecting a type and a layout of an execution screen of at least one application related to an execution screen of an application displayed on a cover display according to unfolding of an electronic device from a fully-folded or prism state to a partially folded state according to an embodiment.

Referring to FIG. 8, the electronic device (e.g., the electronic device 101 in FIG. 1, the processor 120 in FIG. 1, the electronic device 200 in FIG. 2A, or the electronic device 200 in FIG. 5) may display the list 740 on an activated partial area of the flexible display according to primary unfolding from a state in which the execution screen of the application is displayed on the cover display to a partially folded state.

According to an embodiment, the list 740 may include a plurality of items 810, 820, 830, 840, and 850. According to an embodiment, some items 810, 820, 830, and 840 of the plurality of items 810, 820, 830, 840, and 850 may each include a type of at least one application, an arrangement of an execution screen of at least one application, and a description 811, 821, 831, or 841 of at least one application. For example, item 820 includes an application and a description 821 of the application. For example, items 810, 830, and 840 include a description 811, 831, or 841 of the plurality of applications. According to an embodiment, the at least one application included in each of some items 810, 820, 830, and 840 may be related to an extension function obtained based on a content (e.g., a text, an image, or an audio) included in the execution screen of the application displayed on the cover display.

According to an embodiment, a function arrangement combination of respective items 810, 820, 830, and 840 is not a sequential combination of contents extracted from the message but may instead be a combination of at least one action to be predicted to be performed by the user. For example, a layout of a call application and an Internet application of the first item 810 may have a form combined to allow the user to receive a message and search information about a corresponding exhibition. For the combination of functions included in the first item 810, the electronic device may exclude information of a message related to other functions and extract and use information for viewing exhibition information.

According to an embodiment, respective items 810, 820, 830, and 840 may be arranged according to priorities of actions predicted to be performed after the user identifies a message displayed on the cover display. For example, if the user frequently connects to a message sender after identifying the message displayed on the cover display, or the message includes a content requiring contact from the user, a function providing a connection to the sender may be disposed as the first item 810 having a high priority. According to an embodiment, in case that the user frequently executes various applications and identifies a schedule and a location after identifying the message displayed on the cover display, an item 830 providing a schedule and a location inquiry in a 3-split layout may be displayed with a high priority.

According to an embodiment, at least one application included in each item 810, 820, 830, or 840 may have different layouts depending on functions. For example, the Internet application which is provided as an extension function with respect to the message application related to the exhibition may display a web search result for the exhibition, as in item 810, or access the URL included in the message to display an admission pass, as in item 830.

According to an embodiment, when item 810 is selected and the web search result for the exhibition is displayed, an execution screen of the Internet application may be disposed on a large area of the layout, corresponding to the second and third areas 202b, 202c. According to an embodiment, when item 830 is selected and the admission pass is displayed, the execution screen of the Internet application may be disposed on a narrower area of layout corresponding to the third display area 202c.

According to an embodiment, if the electronic device identifies that the user has a history of scrolling or touching a right area of the entire area of the flexible display more frequently than other areas, the electronic device may display an execution screen of an application having more interaction with the user among two or more functions on the right area and display applications expected to have relatively less interaction in the left or center area.

According to an embodiment, if the folding state of the electronic device is changed so that the entire area of the flexible display is activated after the user input selecting one item among some items 810, 820, 830, and 840 is received, the electronic device may display at least one application execution screen included in the selected item in a layout included in selected item. According to an embodiment, the execution screen of the application, which is displayed when each item 810, 820, 830, or 840 is selected will be described in detail with reference to FIGS. 9A to 9D below.

In FIG. 8, according to an embodiment, the list 740 may include an item 850 that refuses to provide extension functions. Item 850 is for preventing an execution screen of an application in the list from being displayed on the flexible display when the folding state is changed to the unfolded state. According to an embodiment, when the folding state of the electronic device is changed so that the entire area of the flexible display is activated after the user input selecting the item 850 that refuses to provide extension functions is received, the electronic device may display a screen identical to the execution screen of the application displayed on the cover display on the entire area of the flexible display. According to an embodiment, the operation in case that the user input selecting the item that refuses to provide extension functions is received will be described in detail with reference to FIG. 12 below.

FIG. 9A is a view illustrating an execution screen of at least one application displayed on a flexible display according to unfolding of an electronic device according to an embodiment.

Referring to FIG. 9A, when the folding state of the electronic device is change so that the entire area of the flexible display is activated after the user input selecting the first item 810 among the plurality of items 810, 820, 830, 840, and 850 included in the list 740 shown in FIG. 8 is received, the electronic device (e.g., the electronic device 101 in FIG. 1, the processor 120 in FIG. 1, the electronic device 200 in FIG. 2A, or the electronic device 200 in FIG. 5) may display, an execution screen of at least one application included in the selected first item 810 in the layout included in the selected item.

According to an embodiment, the electronic device may display an execution screen 910 of a call application capable of performing communication with the message sender on a left display area of the entire area of the flexible display. By displaying the execution screen 910 of the call application, in which a phone number of the message sender is input as a call recipient, the electronic device may allow the user to make a phone call with the sender by selecting a send button even if the user does not input the number of the sender.

According to an embodiment, the electronic device may display an execution screen 911 of the browser application, which is obtained by searching the web for exhibition information, on a central display area and a right display area of the entire area of the flexible display. By displaying the execution screen 911 of the browser application when a main keyword related to the exhibition included in the message is input as a search term, the electronic device may provide information related to the exhibition even if a searching term for the exhibition is not input by the user.

FIG. 9B is a view illustrating an execution screen of at least one application displayed on a flexible display according to unfolding of an electronic device according to an embodiment.

Referring to FIG. 9B, when the folding state of the electronic device is changed so that the entire area of the flexible display is activated after the user input selecting the second item 820 among the plurality of items 810, 820, 830, 840, and 850 included in the list 740 shown in FIG. 8 is received, the electronic device may display an execution screen of at least one application included in the selected second item 820 in the layout included in the selected item.

According to an embodiment, the electronic device may display an execution screen 920 of a document application including summary information for the exhibition on the entire area of the flexible display. For example, the electronic device may generate and provide, in a document form, the summary information related to the exhibition included in the message by using generative artificial intelligence (AI) based on the main keyword and the content included in the message.

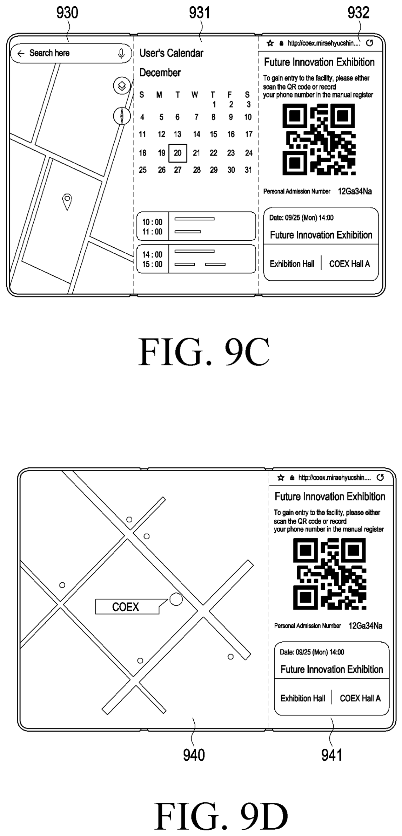

FIG. 9C is a view illustrating an execution screen of at least one application displayed on a flexible display according to unfolding of an electronic device according to an embodiment.

Referring to FIG. 9C, when the folding state of the electronic device is changed so that the entire area of the flexible display is activated after the user input selecting the third item 830 among the plurality of items 810, 820, 830, 840, and 850 included in the list 740 shown in FIG. 8 is received, the electronic device may display an execution screen of at least one application included in the selected third item 830 in the layout included in the selected item.

According to an embodiment, the electronic device may display an execution screen 930 of a map application allowing exhibition place identification on a left display area of the entire area of the flexible display. For example, by displaying the execution screen 930 of the map application displaying a search result obtained by inputting the location of the exhibition, the electronic device may provide place-related information even if the user does not search for the place using the map application.

According to an embodiment, the electronic device may display an execution screen 931 of a calendar application allowing exhibition schedule identification on a central display area of the entire area of the flexible display. For example, the electronic device may provide the execution screen 931 of the calendar application in which an exhibition schedule is registered even if the user does not register the exhibition schedule in the calendar application.

According to an embodiment, the electronic device may display an execution screen 932 of the Internet application displaying an exhibition admission pass, on a right display area of the entire area of the flexible display. For example, by displaying the execution screen 932 of the Internet application, in which an URL included in the message is input, the electronic device may display the admission pass by providing the Internet application execution screen in which the URL is input even if the user does not copy and paste the URL in the message into an address bar.

FIG. 9D is a view illustrating an execution screen of at least one application displayed on a flexible display according to unfolding of an electronic device according to an embodiment.

Referring to FIG. 9D, when the folding state of the electronic device is changed so that the entire area of the flexible display is activated after the user input selecting the fourth item 830 among the plurality of items 810, 820, 840, 840, and 850 included in the list 740 shown in FIG. 8 is received, the electronic device may display an execution screen of at least one application included in the selected fourth item 840 in the layout included in the selected item.

According to an embodiment, the electronic device may display an execution screen 940 of a map application allowing exhibition place identification on a left display area and central display area of the entire area of the flexible display. For example, by displaying the execution screen 940 of the map application displaying a search result obtained by inputting the location of the exhibition, the electronic device may provide place-related information even if the user does not search for the place using the map application.

According to an embodiment, the electronic device may display an execution screen 941 of the Internet application displaying an exhibition admission pass, on a right display area of the entire area of the flexible display. For example, by displaying the execution screen 941 of the Internet application, in which an URL included in the message is input, the electronic device may display the admission pass by providing the Internet application execution screen in which the URL is input even if the user does not copy and paste the URL in the message into an address bar.

FIG. 10 is a view illustrating an operation of displaying a list for selecting a type and a layout of an execution screen of at least one application related to an execution screen of an application displayed on a cover display according to unfolding of an electronic device from a fully-folded or prism state to a partially folded state according to an embodiment.

Referring to FIG. 10, the electronic device (e.g., the electronic device 101 in FIG. 1, the processor 120 in FIG. 1, the electronic device 200 in FIG. 2A, or the electronic device 200 in FIG. 5) may provide different functions depending on a situation when the folding state of the electronic device is changed from a state in which an execution screen of an application is displayed on the cover display to a partially folded state. For example, when the folding state of the electronic device is changed from the fully-folded or prism state in which an exhibition invitation message is displayed on the cover display to a partially folded state in which a partial area of the flexible display is activated, the electronic device may provide a list including different functions based on a time point at which the folding state is changed, a position of the electronic device when the folding state of the electronic device is changed, and/or whether the electronic device moves when the folding state is changed.

According to an embodiment, when the message is displayed on the cover display is immediately after the message including an invitation is received and an exhibition schedule included in the message differs by one week or more from the time the message is displayed, , the electronic device may determine the current time point as a time point at which the user is considering visiting the exhibition. According to an embodiment, the electronic device may provide a list 1010 including a combination of functions related to preparation of the user for visiting the exhibition at the scheduled time. For example, the list 1010 including the combination of functions related to preparation for visiting the exhibition may correspond to the list in FIG. 8.

According to an embodiment, when the operation of displaying the message through the cover display is not an initial displaying operation and the message is re-identified on the day of the exhibition schedule included in the message, the electronic device may determine that the user re-identifies the message for visiting the exhibition. According to an embodiment, the electronic device may provide a list 1020 including a combination of functions required to move to visit the exhibition or functions identifying admission information.

For example, if the electronic device is connected to a registered vehicle through BLE, the electronic device may predict the user's action as desiring to travel to an exhibition hall using the vehicle. According to an embodiment, the electronic device may include a navigation function and a traffic information-related function corresponding to the predicted action in the list 1020. According to an embodiment, if there is a restaurant reservation record or conversation related to the exhibition for the day of the exhibition, the electronic device may provide the list 1020 including items providing, on the 3-split screen layout, a reservation application that provides reservation records, a calendar application that provides reservation schedules, and a messenger application that provides conversation histories.

According to an embodiment, an arrangement of the functions included in the list 1010 or 1020 may be determined based on a usage history of each application. According to an embodiment, the electronic device may determine applications by assigning weights based on the user's preferences and usage time of applications in relation to specific functions and determine a layout of application execution screens based on an arrangement history of applications. For example, if the map application is primarily used for simple place queries when executed in a bar-type ratio (e.g., the cover display or one display area of the three display areas of the flexible display), while it is mainly used for exploring large areas after searching for a specific place in an arrangement shape having a higher horizontal aspect ratio (e.g., two or three display areas of the three display areas of the flexible display), the electronic device may determine a layout of applications by assigning the map application on one of three display areas of the flexible display when a function for a specific place is required and assigning the map application on two display areas of the flexible display when searching the surrounding area or providing a route is required.

FIG. 11 is a view illustrating an operation of displaying a list for selecting at least one application related to an execution screen of an application displayed on a cover display according to unfolding of an electronic device according to an embodiment.

Referring to FIG. 11, the electronic device (e.g., the electronic device 101 in FIG. 1, the processor 120 in FIG. 1, the electronic device 200 in FIG. 2A, or the electronic device 200 in FIG. 5) may display, when the folding state of the electronic device is changed from a fully folded or prism state in which the electronic device displays an execution screen of an application on the cover display to a partially folded state in which only a partial area of the flexible display is activated, a list 1110 including at least one related application on the activated partial area of the flexible display, based on a content included in the execution screen of the application displayed on the cover display.

According to an embodiment, the list 1110 may include actions predicted to be performed by the user after the execution screen of the application displayed on the cover display is identified and a plurality of applications corresponding to the actions, respectively. The list 1110 does not include layouts related to an arrangement of the applications.

According to an embodiment, when the folding state of the electronic device is changed to the fully-unfolded state in which the entire area of the flexible display is activated after a user input selecting two or more applications 1111 and 1112 among the plurality of applications included in the list 1110 is received, the electronic device may display execution screens 1120 of the selected applications 1111 and 1112 as multiple windows.

According to an embodiment, the electronic device may display the execution screens 1120 of the selected applications 1111 and 1112 having an identical ratio on the entire area of the flexible display. According to an embodiment, the electronic device may display the execution screens 1130 and 1131 of the selected applications 1111 and 1112, of which the layout has been adjusted based on a layout history when the user has used the selected applications 1111 and 1112 as multiple windows. For example, the electronic device may display, based on a history in which a relative size of the execution screen of the map application related to displayed location is increased and the user arranges the execution screen of the map application, execution screens 1130 of the applications 1111 and 1112 in which the execution screen of the map application is disposed on the right side, or execution screens 1131 of the applications 1111 and 1112 in which the execution screen of the map application is disposed on the left side.

FIG. 12 is a view illustrating an operation of displaying, on a flexible display, an execution screen of an application identical to an execution screen of an application displayed on a cover display according to unfolding of an electronic device according to an embodiment.

Referring to FIG. 12, the electronic device (e.g., the electronic device 101 in FIG. 1, the processor 120 in FIG. 1, the electronic device 200 in FIG. 2A, or the electronic device 200 in FIG. 5) may display the list 1220 on an activated partial area of the flexible display according to primary unfolding from the fully-folded or prism state in which the execution screen 1210 of the application is displayed on the cover display to the partially folded state.

According to an embodiment, the list 1220 may include an item 1221 that refuses to provide extension functions. Item 1221 is for rejecting the display of applications from the list. According to an embodiment, when the folding state of the electronic device is changed to the fully-unfolded state in which the entire area of the flexible display is activated after the user input selecting the item 1221 that refuses to provide extension functions is received, the electronic device may display an execution screen 1230 of an application identical to the execution screen 1210 of the application displayed on the cover display on the entire area of the flexible display. For example, when the execution screen 1210 of the message application is displayed on the cover display and the folding state of the electronic device is changed so that the entire area of the flexible display is activated after the user input selecting the item 1221 that refuses to provide extension functions is received, the electronic device may display the execution screen 1230 of the message application in a layout of a tablet terminal on the entire area of the flexible display.

FIG. 13 is a view illustrating an operation of displaying a guidance message on a flexible display according to unfolding of an electronic device in case that a harmful content is included in an execution screen of an application displayed on a cover display according to an embodiment.

Referring to FIG. 13, the electronic device (e.g., the electronic device 101 in FIG. 1, the processor 120 in FIG. 1, the electronic device 200 in FIG. 2A, or the electronic device 200 in FIG. 5) may identify that a harmful message is included in an execution screen 1310 of an application displayed on the cover display when the folding state of the electronic device corresponds to the fully-folded state or the prism state. For example, the harmful message may correspond to a message including spam or content that directs access to harmful sites.

According to an embodiment, when it is identified that the harmful message is included in the execution screen 1310 of the application and the folding state of the electronic device is changed to a partially folded state in which only a partial area of the flexible display is activated, the electronic device may display a notification 1320 warning the harmful message on the activated partial area of the flexible display. According to an embodiment, the electronic device may display a user-selectable button 1321 for stopping the provision of an extension function and a user-selectable button 1322 for identifying an extension function together with the warning notification 1320.

According to an embodiment, if the folding state of the electronic device is changed to a fully-unfolded state in which the entire area of the flexible display is activated after the button 1321 for stopping the provision of an extension function is selected, the electronic device may display an execution screen of an application having the same function in a layout of a tablet terminal, as shown in FIG. 12, or may provide the home screen.

According to an embodiment, if the button 1322 for identifying an extension function is selected, the electronic device may display a list including at least one application related to the content included in the harmful message and/or a layout. According to an embodiment, if a user input selecting at least one application and/or a layout included in the list is received and the folding state of the electronic device is changed to a fully-unfolded state in which the entire area of the flexible display is activated, the electronic device may display an execution screen of the selected at least one application in the selected layout.

According to an embodiment, in case that after the button 1322 for identifying an extension function is selected, the folding state of the electronic device is changed to a state in which the entire area of the flexible display is activated, the electronic device may display an execution screen of at least one application related to a content included in a harmful message in the multiple windows on the entire area of the flexible display.

FIG. 14A is a view illustrating an operation of predicting an action of a user based on a content of an execution screen of an application displayed on a cover display of an electronic device according to an embodiment.

Referring to FIG. 14A, the electronic device (e.g., the electronic device 101 in FIG. 1, the processor 120 in FIG. 1, the electronic device 200 in FIG. 2A, or the electronic device 200 in FIG. 5) detects that the folding state of the electronic device is changed from the fully-folded state or the prism state after a message 1410 is displayed on the cover display by a user input and analyzes a content of the message 1410. For example, the electronic device may analyze texts included in the message 1410.

According to an embodiment, the electronic device may predict 1420 actions to be performed by the user, based on an analysis result of the texts included in the message 1410. According to an embodiment, the electronic device may predict 1420 actions to be performed by the user, based on an analysis result of the texts through a trained artificial intelligence (AI) model 1421. For example, the trained artificial intelligence (AI) model 1421 may have been trained to obtain a context 1430 and a keyword 1440 of texts as output data by using the texts included in the message as input data.

According to an embodiment, the message context 1430 may include a message type 1431, a user's role 1432, and a sender's role 1433. For example, in case that the message 1410 includes the exhibition admission pass, it may be identified that the message type 1431 corresponds to the exhibition admission pass, the user's role 1432 corresponds to an exhibition participant, and the sender's role 1433 corresponds to an exhibition organizer.

According to an embodiment, the main keyword 1440 may include a place-related text 1411 and a link-related text 1412 included in the message 1410. For example, the place-related text 1411 may include location information 1441 (e.g., COEX Hall A Main Conference Hall), and the link-related text 1412 may include URL-related information 1442 for issuing passes (e.g., click the link below or QR code).

According to an embodiment, the electronic device may predict 1450 a next action of the user, based on the analyzed message context 1430 and the main keyword 1440. According to an embodiment, the electronic device may predict 1450 a next action of the user by considering a user's situation based on information (e.g., current time) of the electronic device and/or sensor information (e.g., a location of the electronic device or whether the electronic device moves) of the electronic device as well as the message context 1430 and the main keyword 1440.

For example, the actions predicted to be performed by the user after identifying the exhibition message 1410 may include an operation of identifying 1451 an exhibition place and an operation of identifying 1452 an exhibition pass.

FIG. 14B is a view illustrating an operation of determining function selection and arrangement based on the action of the user which has been predicted in FIG. 14A of the electronic device according to an embodiment.

Referring to FIG. 14B, the electronic device may perform an operation of extension function arrangement 1460, based on the operation of identifying 1451 an exhibition place and the operation of identifying 1452 an exhibition pass which corresponds to the actions predicted to be performed by the user. According to an embodiment, the electronic device may select 1470 a function, based on the predicted actions 1451 and 1452 for the operation of extension function arrangement 1460. According to an embodiment, the operation of selecting 1470 a function may include an operation of identifying an application related to the function. For example, the electronic device may identify a map application 1471 related to a place identification function and an Internet application 1472 related to a pass link access function, based on the predicted actions 1451 and 1452. According to an embodiment, in the operation of selecting 1470 a function, the electronic device may use a function pool which may be provided by the electronic device. The function pool may correspond to a functional categorization of applications installed on the electronic device.

According to an embodiment, the electronic device may determine 1480 an arrangement of execution screens of the identified applications 1471 and 1472. According to an embodiment, the electronic device may determine 1480 an arrangement of execution screens of the identified applications 1471 and 1472, based on a user's application usage history and a multi-window usage history of applications. For example, the electronic device may determine, based on the user's application usage history and/or the multi-window usage history of applications, an execution screen arrangement 1481 of the map application in two areas on the left among 3-split display areas of the flexible display and an execution screen arrangement 1482 of the Internet application on one area on the right among 3-split screens of the flexible display. According to an embodiment, the operation of determining the layout of application execution screens based on the application usage history and the multi-window usage history of applications will be described in detail with reference to FIG. 15 below.

According to an embodiment, the electronic device may display execution screens 1483 of applications, based on the determined application execution screen arrangements 1481 and 1482.

FIG. 15 is a view illustrating an operation of determining an arrangement of execution screens of a plurality of applications of an electronic device according to an embodiment.

Referring to FIG. 15, the electronic device (e.g., the electronic device 101 in FIG. 1, the processor 120 in FIG. 1, the electronic device 200 in FIG. 2A, or the electronic device 200 in FIG. 5) may determine 1540 the layout of the application execution screens through an artificial intelligence model 1530.

According to an embodiment, the artificial intelligence model 1530 may be trained based on application usage information 1510 obtained through various types of electronic devices. For example, the artificial intelligence 1530 may be trained based on an application usage history through a tablet-type electronic device, bar-type electronic device, and/or foldable device and/or an application usage history when a multi-window function is executed.

According to an embodiment, the artificial intelligence model 1530 may be trained based on application usage information 1520 obtained through electronic devices used by the user. For example, the electronic devices used by the user may correspond to electronic devices registered to the user's account. For example, the electronic devices registered to the user's account may include a tablet-type electronic device, a bar-type electronic device, a foldable device and/or a multi-foldable device. According to an embodiment, the artificial intelligence model 1530 may be trained based on an application usage history of electronic devices used by the user and/or an application usage history when a multi-window function is executed.

According to an embodiment, the electronic device may configure a general arrangement reference of applications through the artificial intelligence model 1530 having been trained based on application usage information 1510 obtained through various types of electronic devices and determine 1540 an layout of applications by training (e.g., fine tuning) the artificial intelligence model 1530, based on the application usage information 1520 obtained through electronic devices used by the user.

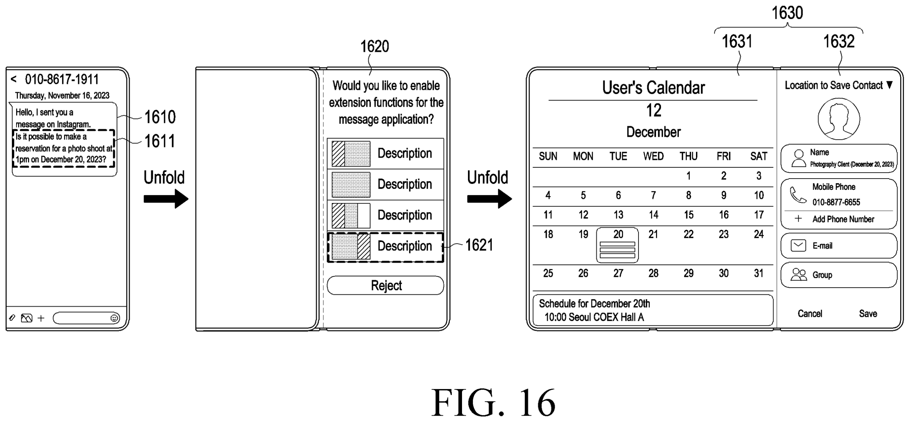

FIG. 16 is a view illustrating an operation of displaying, on a flexible display, an execution screen of at least one application related to an execution screen of an application displayed on a cover display according to unfolding of an electronic device according to an embodiment.

Referring to FIG. 16, the electronic device (e.g., the electronic device 101 in FIG. 1, the processor 120 in FIG. 1, the electronic device 200 in FIG. 2A, or the electronic device 200 in FIG. 5) may display an execution screen 1610 of a message application through the cover display when the folding state of the electronic device corresponds to the fully-folded state or the prism state. For example, the execution screen 1610 of the message application may include a text, and the electronic device may obtain, in case that the folding state is changed, a context and/or main keyword, based on a partial text 1611 (e.g., Is it possible to make a reservation for a photo shoot at 1 p.m. on December 20, 2023?). For example, the electronic device may identify that it is a reservation inquiry message based on the context identified through the partial text 1611.

According to an embodiment, the electronic device may identify the context in which a sender is asking the user to make a reservation for a specific date and predict a next action of the user by inquiring about a schedule and storing customer information.

According to an embodiment, when the folding state of the electronic device is changed to a partially folded state in which only a partial area of the flexible display is activated, a list 1620 including at least one application related based on a text included in an execution screen of an application displayed on the cover display may be displayed on the activated partial area of the flexible display. According to an embodiment, the list 1620 may include applications related to an action predicted as a next action of the user. For example, the electronic device may include a calendar application for a schedule inquiry function and a contact application for a contact storing function, and may display the list 1620 including an application execution screen arrangement on the activated partial area of the flexible display.

According to an embodiment, when the folding state of the electronic device is changed to a fully-unfolded state in which the entire area of the flexible display is activated after a user input selecting one item 1621 among the plurality of items included in the list 1620 is received, the electronic device may display an execution screen 1630 of at least one application included in the selected item 1621 in the layout of the selected item 1621. For example, the execution screen 1630 of the at least one application may display an execution screen 1631 of the calendar application on two areas on the left among three split display areas of the entire area of the flexible display and display an execution screen 1632 of the contact application on the remaining one area on the right.

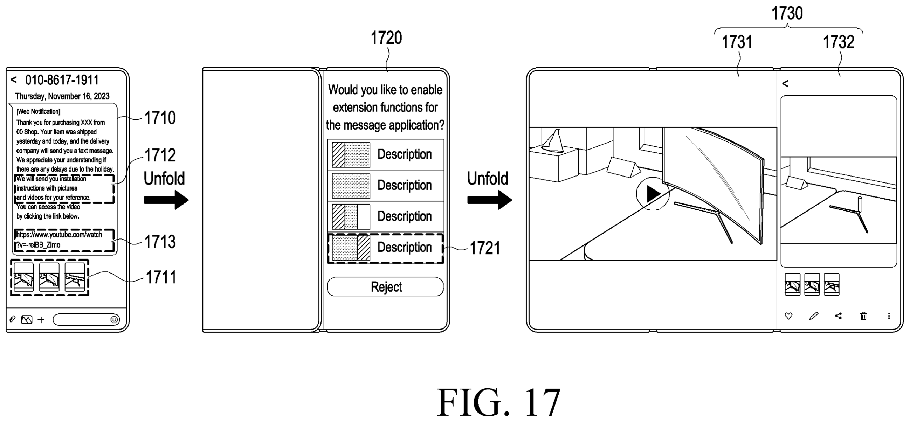

FIG. 17 is a view illustrating an operation of displaying, on a flexible display, an execution screen of at least one application related to an execution screen of an application displayed on a cover display according to unfolding of an electronic device according to an embodiment.

Referring to FIG. 17, the electronic device (e.g., the electronic device 101 in FIG. 1, the processor 120 in FIG. 1, the electronic device 200 in FIG. 2A, or the electronic device 200 in FIG. 5) may display an execution screen 1710 of a message application through the cover display when the folding state of the electronic device corresponds to the fully-folded state or the prism state. For example, the message application execution screen 1710 may include a text and include at least one image 1711.

According to an embodiment, the electronic device may obtain, in case that a change in the folding state is identified, a context and/or main keyword based on partial texts 1712 and 1713 (e.g., "We will send you pictures and videos showing how to install our products.", "https://www.~") of the message application execution screen 1710. For example, the electronic device may identify that the message is an installation guidance message based on the context identified through the partial texts 1712 and 1713.

According to an embodiment, the electronic device may identify that a sender as a product seller has informed a buyer about the product installation and predict that, as a next action, the user will inquire the installation video and identify the attached installation guide image.

According to an embodiment, the electronic device may identify a video application capable of playing the video from a link 1713 included in the message 1710 and a gallery application capable of displaying the attached image 1711, and may determine a layout of execution screens of the applications.

According to an embodiment, when the folding state of the electronic device is changed from the fully-folded or prism state to a partially folded state in which only a partial area of the flexible display is activated, the electronic device may display, based on a text included in the execution screen of an application displayed on the cover display, a list 1720 including at least one application on the activated partial area of the flexible display. According to an embodiment, the list 1720 may include applications related to an action predicted as a next action of the user. For example, the electronic device may include the video application for a video reproduction function and the gallery application for a image displaying function, and may display the list 1720 including an application execution screen arrangement on the activated partial area of the flexible display.

According to an embodiment, when the folding state of the electronic device is changed from the partially folded state to a fully unfolded state in which the entire area of the flexible display is activated after a user input selecting one item 1721 among the plurality of items included in the list 1720 is received, the electronic device may store images 1711 displayed on the cover display and displays an execution screen 1730 of at least one application included in the selected item 1721 in the layout of the selected item 1721. For example, the execution screen 1730 of the at least one application may display an execution screen 1731 of the video application on two areas on the left among three split display areas of the entire area of the flexible display and display an execution screen 1732 of the gallery application on the remaining one area on the right.

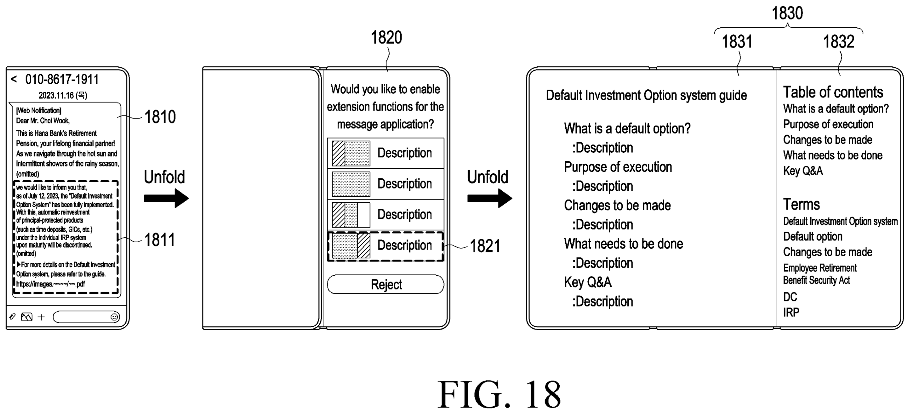

FIG. 18 is a view illustrating an operation of displaying, on a flexible display, an execution screen of at least one application related to an execution screen of an application displayed on a cover display according to unfolding of an electronic device according to an embodiment.

Referring to FIG. 18, the electronic device (e.g., the electronic device 101 in FIG. 1, the processor 120 in FIG. 1, the electronic device 200 in FIG. 2A, or the electronic device 200 in FIG. 5) may display an execution screen 1810 of a message application through the cover display when the folding state of the electronic device corresponds to the fully-folded state or the prism state. For example, the execution screen 1810 of the message application may include a text.

According to an embodiment, when a change in the folding state is identified, the electronic device may obtain a context and/or main keyword based on a partial text 1811 (e.g., a notification message about a user's financial product and a URL linking to a product guide document) of the message application execution screen 1810. For example, the electronic device may identify that it is a financial product guidance message based on the context identified through the partial text 1811.

According to an embodiment, the electronic device may predict a user's next action to understand the financial product and inquire the attached document.

According to an embodiment, the electronic device may identify that Web URL 1811 included in the message 1810 corresponds to the product guidance document and determine to provide a summary document or terminology definition for the product guidance information as an extension function through a generative AI.

According to an embodiment, when the folding state of the electronic device is changed to a partially folded state in which only a partial area of the flexible display is activated, the electronic device may display, based on a text included in an execution screen of an application displayed on the cover display, a list 1820 including at least one application on the activated partial area of the flexible display. According to an embodiment, the list 1820 may include applications related to an action predicted as a next action of the user. For example, the electronic device may display a list 1820 including an arrangement of document application execution screens (e.g., an execution screen related to providing a summary document, an execution screen related to providing a table of contents, and an execution screen related to providing definitions of terms) on the activated partial area of the flexible display.

According to an embodiment, when the folding state of the electronic device is changed to a fully unfolded state in which the entire area of the flexible display is activated after a user input selecting one item 1821 among the plurality of items included in the list 1820 is received, the electronic device may store the document of the Web URL and may display an execution screen 1830 of at least one application included in the selected item 1821 in the layout of the selected item 1821. For example, the execution screen 1830 of the at least one application may display an execution screen 1831 related to providing a summary document on two areas on the left among three split display areas of the entire area of the flexible display and display an execution screen 1732 related to providing a table of contents and providing definitions of terms on the remaining one area on the right.

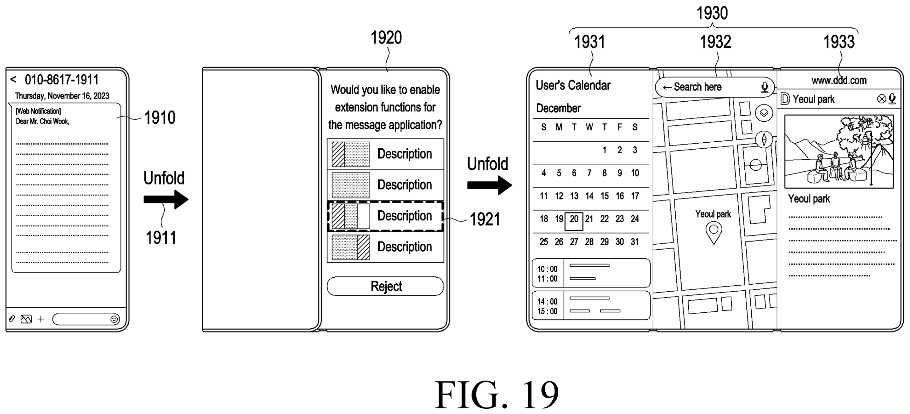

FIG. 19 is a view illustrating an operation of displaying, on a flexible display, an execution screen of at least one application related to an execution screen of an application displayed on a cover display according to unfolding of an electronic device according to an embodiment.

Referring to FIG. 19, the electronic device (e.g., the electronic device 101 in FIG. 1, the processor 120 in FIG. 1, the electronic device 200 in FIG. 2A, or the electronic device 200 in FIG. 5) may display an execution screen 1910 of a message application through the cover display when the folding state of the electronic device corresponds to the fully-folded state or the prism state. For example, the execution screen 1910 of the message application may include a text.

According to an embodiment, when a change in the folding state is identified, the electronic device may predict a next action of the user by further considering sensor and internal information 1911 (e.g., current time, a location of the electronic device, and whether the electronic device moves) of the electronic device. For example, if a time difference between a time point at which the user currently identifies the message and an appointment time in the message text is calculated to be two weeks and it is determined that the user is currently in an office by identifying name information of connected devices from a BLE sensor of the user, the electronic device may predict that the user will perform place identification, web searching, and a schedule inquiry with respect to a place included in the message.

According to an embodiment, when the folding state of the electronic device is changed to a partially folded state in which only a partial area of the flexible display is activated, the electronic device may display, based on a text included in an execution screen of an application displayed on the cover display, a list 1920 including at least one application on the activated partial area of the flexible display. According to an embodiment, the list 1920 may include applications related to an action predicted as a next action of the user. For example, the electronic device may display, on the activated partial area of the flexible display, the list 1920 including an arrangement of execution screens of the calendar application for identifying a schedule, the map application for identifying a place location, and the Internet application for searching place information.

According to an embodiment, when the folding state of the electronic device is changed to a fully unfolded state in which the entire area of the flexible display is activated after a user input selecting one item 1921 among the plurality of items included in the list 1920 is received, the electronic device may display an execution screen 1930 of at least one application included in the selected item 1921 in the layout of the selected item 1921. For example, the execution screen 1930 of the at least one application may display an execution screen 1931 of the calendar application for identifying a schedule on one area on the left among three split display areas of the entire area of the flexible display, an execution screen 1932 of the map application for identifying a place location on one area at the center, and an execution screen 1933 of the Internet application for searching place information on one area on the right.

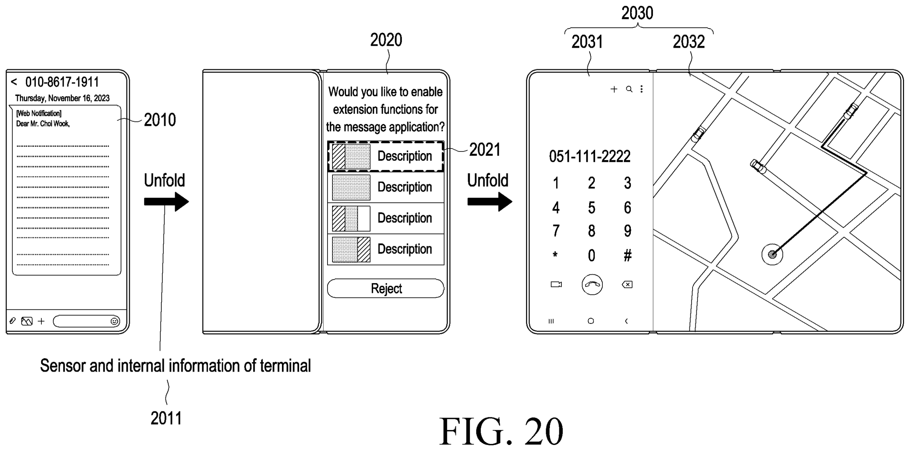

FIG. 20 is a view illustrating an operation of displaying, on a flexible display, an execution screen of at least one application related to an execution screen of an application displayed on a cover display according to unfolding of an electronic device according to an embodiment.

Referring to FIG. 20, the electronic device (e.g., the electronic device 101 in FIG. 1, the processor 120 in FIG. 1, the electronic device 200 in FIG. 2A, or the electronic device 200 in FIG. 5) may display an execution screen 2010 of a message application through the cover display when the folding state of the electronic device corresponds to the fully-folded state or the prism state. For example, the execution screen 2010 of the message application may include a text.

According to an embodiment, when a change in the folding state is identified, the electronic device may predict a next action of the user by further considering sensor and internal information 2011 (e.g., current time, a location of the electronic device, and whether the electronic device moves) of the electronic device. For example, the electronic device may identify that the current time when the user identifies the message is close to the scheduled time of the content of the message and identify the user is inside a vehicle and in transit based on a current terminal's GPS sensor and UWB sensor information. According to an embodiment, based on analyzing BLE connection information, the electronic device may identify that wireless earphones have been disconnected and the vehicle has been connected and may provide an extension function different from that shown in FIG. 19. According to an embodiment, the electronic device may predict that the user will identify a route from a current location to the place and make a call to the sender.

According to an embodiment, when the folding state of the electronic device is changed to a partially-folded state in which only a partial area of the flexible display is activated, the electronic device may display, based on a text included in an execution screen of an application displayed on the cover display, a list 2020 including at least one application on the activated partial area of the flexible display. According to an embodiment, the list 2020 may include applications related to an action predicted as a next action of the user. For example, the electronic device may display, on the activated partial area of the flexible display, the list 2020 including an arrangement of execution screens of a navigation application for providing a route and a call application for phone call with a sender.

According to an embodiment, when the folding state of the electronic device is changed to a fully unfolded state in which the entire area of the flexible display is activated after a user input selecting one item 1921 among the plurality of items included in the list 2020 is received, the electronic device may display an execution screen 2030 of at least one application included in the selected item 2021 in the layout of the selected item 2021. For example, the execution screen 2030 of the at least one application may display an execution screen 2031 of the call application for phone call on one area on the left among three split display areas of the entire area of the flexible display and display an execution screen 2032 of the navigation application for providing a route on two areas on the right.

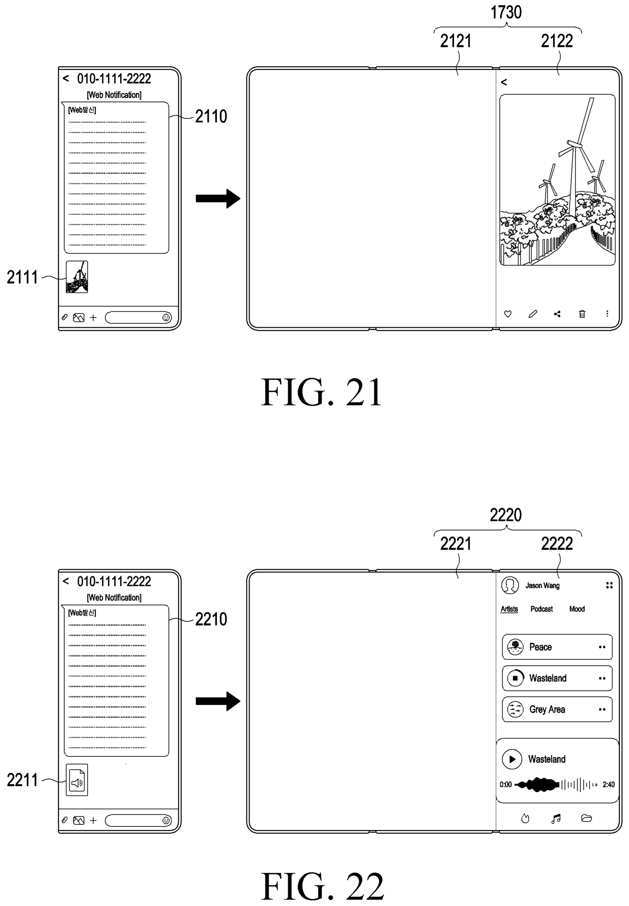

FIG. 21 is a view illustrating an operation of displaying, on a flexible display, an execution screen of at least one application related to an execution screen of an application displayed on a cover display according to unfolding of an electronic device according to an embodiment.

Referring to FIG. 21, the electronic device (e.g., the electronic device 101 in FIG. 1, the processor 120 in FIG. 1, the electronic device 200 in FIG. 2A, or the electronic device 200 in FIG. 5) may display an execution screen 2110 of a message application through the cover display when the folding state of the electronic device corresponds to the fully-folded state or the prism state. For example, the message application execution screen 2110 may include a text and include at least one image 2111.

According to an embodiment, when a change in the folding state is identified, the electronic device may predict, based on a content of the message and an image 2111 being attached, that the user will execute an extension function related to the message and inquire the image, as a next action as the user.

According to an embodiment, the electronic device may identify an application related to the content included in the message and a gallery application capable of displaying the attached image 2111, and may determine a layout of execution screens of the applications. According to an embodiment, although in the case in which an image is attached to the execution screen of the message application in the FIG. 17, when the folding state of the electronic device is changed to a state in which the entire area of the flexible display is activated, the image is displayed on one area on the right among three split display areas of the entire area of the flexible display, referring to FIG. 21, the electronic device may determine an area to display the image 2111 among three split display areas of the entire area of the flexible display, based on an aspect ratio of the attached image 2111.

According to an embodiment, the electronic device may determine a position of an execution screen of an application displaying the image 2111 based on the aspect ratio of the image 2111. For example, if the image 2111 is longer in height than width, the electronic device may dispose an execution screen of an application for displaying the image 2111 on the left display area or the right display area of the entire area of the flexible display and may dispose an execution screen of an application for executing an extension function related to the message on the remaining two display areas. According to an embodiment, if the image 2111 is longer in width than in height, the electronic device may dispose an execution screen of an application for displaying the image 2111 on two display areas of the entire area of the flexible display and dispose an execution screen of an application for executing an extension function related to the message on the remaining one display area.

For example, as shown in FIG. 21, when the image is longer in height than in width and the folding state of the electronic device is changed to a fully unfolded state in which the entire area of the flexible display is activated, the electronic device may store the image 2111 displayed on the cover display and may display execution screens 2120 of a plurality of applications related to an extension function of the execution screen 2110 of the message application. For example, the execution screen 2120 of the plurality of applications may display an execution screen 2121 of the application for executing an extension function related to the content included in the message on two display areas on the left among the entire area of the flexible display and display an execution screen 2122 of the gallery application for displaying the image 2111 on the right display area.

FIG. 22 is a view illustrating an operation of displaying, on a flexible display, an execution screen of at least one application related to an execution screen of an application displayed on a cover display according to unfolding of an electronic device according to an embodiment.

Referring to FIG. 22, the electronic device (e.g., the electronic device 101 in FIG. 1, the processor 120 in FIG. 1, the electronic device 200 in FIG. 2A, or the electronic device 200 in FIG. 5) may display an execution screen 2210 of a message application through the cover display when the folding state of the electronic device corresponds to the fully-folded state or the prism state. For example, the message application execution screen 2210 may include a text and include at least one audio file 2211.

According to an embodiment, when a change in the folding state is identified, the electronic device may predict, based on a content of the message and the audio file 2211 being attached, that the user will execute an extension function related to the message and reproduce the audio file 2211, as a next action. For example, the message may include a text related to the audio file 2211.

According to an embodiment, the electronic device may identify an application for providing information related to the audio file 2211 in a text (e.g., a lyric script) and an audio reproduction application capable of providing the attached audio file 2211 and determine a layout of execution screens 2220 of the plurality of applications. According to an embodiment, based on a usage history of the audio reproduction application of the user, if it is determined that the execution screen 2222 of the audio reproduction application is frequently disposed and used on one display area of the entire area of the flexible display, the electronic device may arrange an execution screen 2222 of the audio reproduction application on one display area of the entire area of the flexible display and arrange an execution screen 2221 of an application for providing information related to the audio file 2211 in a text on the remaining two display areas.

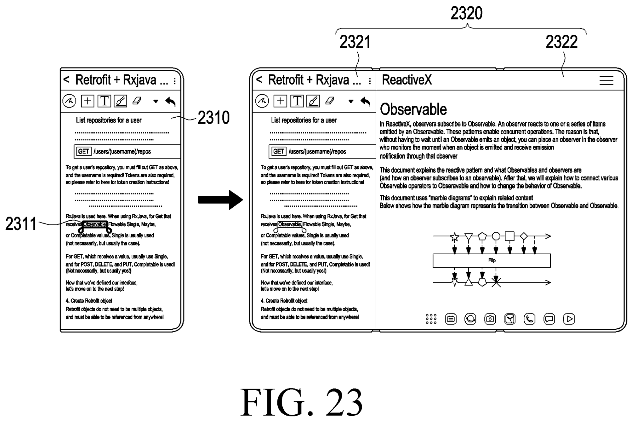

FIG. 23 is a view illustrating an operation of displaying, on a flexible display, an execution screen of at least one application related to an execution screen of an application displayed on a cover display according to unfolding of an electronic device according to an embodiment.

Referring to FIG. 23, the electronic device (e.g., the electronic device 101 in FIG. 1, the processor 120 in FIG. 1, the electronic device 200 in FIG. 2A, or the electronic device 200 in FIG. 5) may display an execution screen 2310 of an application including a text through the cover display when the folding state of the electronic device corresponds to the fully-folded state or the prism state. For example, the execution screen 2310 of the application including a text may include a browser application, a messenger application, a document application, or a note application. According to an embodiment, the electronic device may receive a user input selecting a partial text 2311 among texts included in the execution screen 2310 of the browser application. For example, the selection of the partial text 2311 may be performed by a long touch, a double touch, a gesture drawing a circle, or a drag.

According to an embodiment, in case that a change in the folding state is identified, the electronic device may predict, based on a content of texts included in the application execution screen 2310 and selection of the text 2311, that the user will search for the selected text 2311 while watching the application execution screen 2310, as a next action as the user.

According to an embodiment, the electronic device may search for the text 2311 selected by the user among the texts included in the application execution screen 2310 through the browser application. For example, the search of the selected text 2311 may be performed based on a content, context, and/or keyword of the texts included in the application execution screen 2310.

According to an embodiment, when the folding state of the electronic device is changed to a fully unfolded state in which the entire area of the flexible display is activated, the electronic device may display an execution screen 2321 of an application identical to an execution screen 2310 of an application displayed on the cover display and execution screens 2320 of a plurality of applications including the execution screen 2322 of the browser application including a search result.

According to an embodiment, the electronic device may display the execution screen 2321 of the application on one display area the entire area of the flexible display so as to be displayed, on the flexible display, in a ratio identical to that of the application execution screen 2310 displayed on the cover display. According to an embodiment, the electronic device may display an execution screen 2322 of an application for providing the search result of the selected text 2311 on two display areas of the entire area of the flexible display.

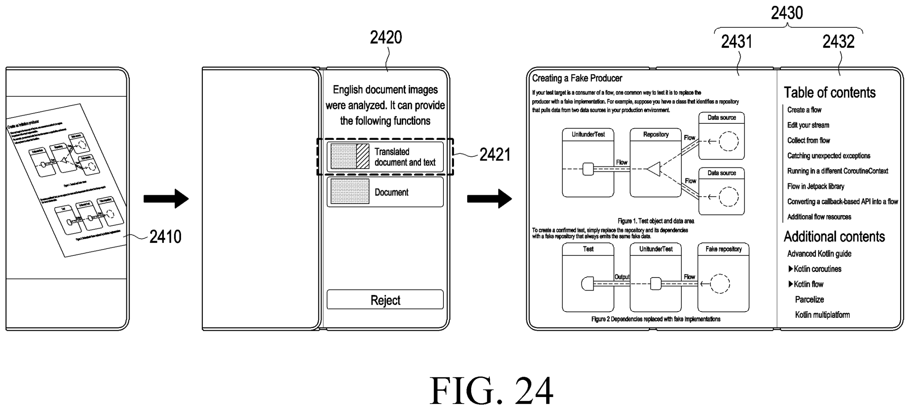

FIG. 24 is a view illustrating an operation of displaying, on a flexible display, an execution screen of at least one application related to an execution screen of an application displayed on a cover display according to unfolding of an electronic device according to an embodiment.

Referring to FIG. 24, the electronic device (e.g., the electronic device 101 in FIG. 1, the processor 120 in FIG. 1, the electronic device 200 in FIG. 2A, or the electronic device 200 in FIG. 5) may display an execution screen 2410 of an application through the cover display when the folding state of the electronic device corresponds to the fully-folded state or the prism state. For example, the execution screen 2410 of the application may include a preview screen of a camera application obtained by capturing a document including an English text and/or an image.

According to an embodiment, if a document including an English text and/or an image including an English text is displayed, the electronic device may predict, based on a usage history of a translation application of the user, that the user will translate the document and identify additional information related to the document, as a next action of the user.

According to an embodiment, when the folding state of the electronic device is changed to a partially folded state in which only a partial area of the flexible display is activated, the electronic device may display, based on a text included in an execution screen 2410 of an application displayed on the cover display, a list 2420 including at least one application on the activated partial area of the flexible display. According to an embodiment, the list 2420 may include applications related to an action predicted as a next action of the user. For example, the electronic device may include the note application for displaying a translated document and the note application for providing additional information related to the document, and may display the list 2420 including an application execution screen arrangement on the activated partial area of the flexible display.

According to an embodiment, when the folding state of the electronic device is changed to a fully unfolded state in which the entire area of the flexible display is activated after a user input selecting one item 2421 among the plurality of items included in the list 2420 is received, the electronic device may display an execution screen 2430 of at least one application included in the selected item 2421 in the arrangement of the selected item 2421. For example, the execution screen 2430 of the at least one application may display an execution screen 2431 of the note application displaying the translated document on two areas on the left among three split planes of the entire area of the flexible display and display an execution screen 2432 of the note application providing the additional information of the document on the remaining one area on the right.

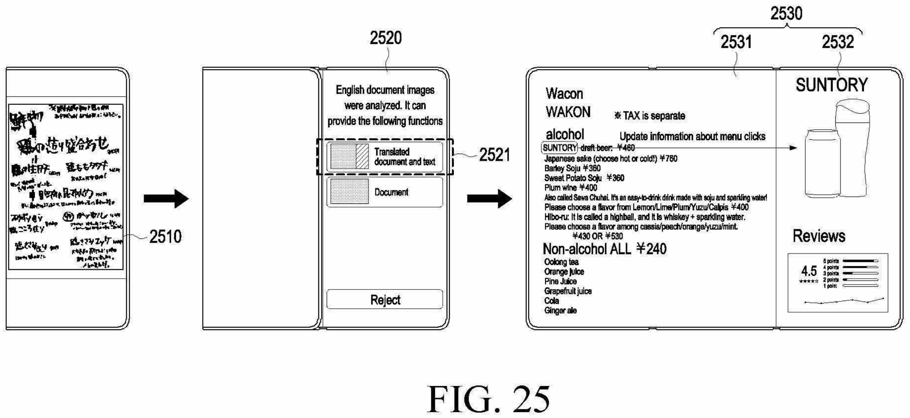

FIG. 25 is a view illustrating an operation of displaying, on a flexible display, an execution screen of at least one application related to an execution screen of an application displayed on a cover display according to unfolding of an electronic device according to an embodiment.

Referring to FIG. 25, the electronic device (e.g., the electronic device 101 in FIG. 1, the processor 120 in FIG. 1, the electronic device 200 in FIG. 2A, or the electronic device 200 in FIG. 5) may display an execution screen 2510 of an application through the cover display when the folding state of the electronic device corresponds to the fully-folded state or the prism state. For example, the execution screen 2410 of the application may include a preview screen of the camera application obtained by capturing a document (e.g., a menu board) including a Japanese text.

According to an embodiment, the electronic device may identify that the image has been captured by the user in a foreign country, based on country information where the electronic device information is registered, nationality information of the user of the electronic device, and country information where the electronic device is currently located. According to an embodiment, the electronic device may identify that the number of uses of the translation application has recently increased and predict that the user will translate the document and identify additional information related to a text included in the document, as a next action of the user.

According to an embodiment, when the folding state of the electronic device is changed to a partially folded state in which only a partial area of the flexible display is activated, the electronic device may display, based on a text included in an execution screen 2510 of an application displayed on the cover display, a list 2520 including at least one application on the activated partial area of the flexible display. According to an embodiment, the list 2520 may include applications related to an action predicted as a next action of the user. For example, the electronic device may include the note application for displaying a translated document and the browser application for providing additional information (e.g., product information of a menu board and a product review) related to the text, and may display the list 2520 including an application execution screen layout on the activated partial area of the flexible display.

According to an embodiment, when the folding state of the electronic device is changed to a fully unfolded state in which the entire area of the flexible display is activated after a user input selecting one item 2521 among the plurality of items included in the list 2520 is received, the electronic device may display an execution screen 2530 of at least one application included in the selected item 2521 in the layout of the selected item 2521. For example, the execution screen 2530 of the at least one application may display an execution screen 2531 of the note application displaying the translated document on two display areas on the left among the entire area of the flexible display and displays the browser application 2532 for providing the additional information related to the text on the remaining one display area on the right.

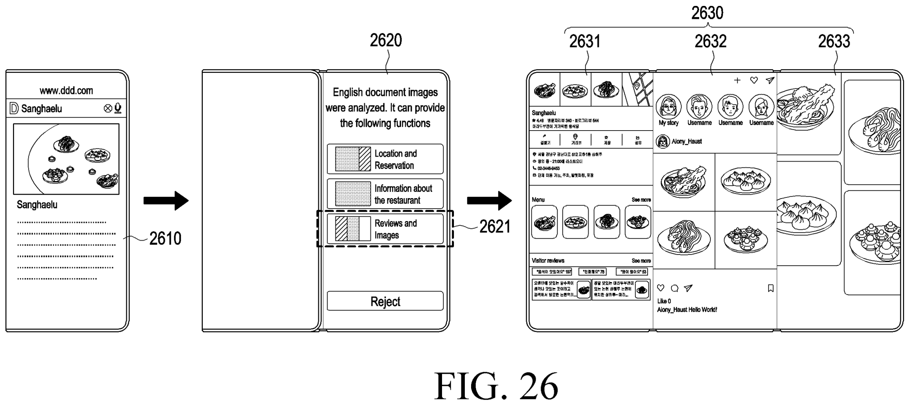

FIG. 26 is a view illustrating an operation of displaying, on a flexible display, an execution screen of at least one application related to an execution screen of an application displayed on a cover display according to unfolding of an electronic device according to an embodiment.

Referring to FIG. 26, the electronic device (e.g., the electronic device 101 in FIG. 1, the processor 120 in FIG. 1, the electronic device 200 in FIG. 2A, or the electronic device 200 in FIG. 5) may display an execution screen 2610 of an application through the cover display when the folding state of the electronic device corresponds to the fully-folded state or the prism state. For example, the execution screen 2610 of the application may include a search result screen of the browser application obtained by performing a search using a search term entered by the user.

According to an embodiment, the electronic device may obtain a context and a main keyword of the search term and the search result, based on the text included in the search term and the search result. According to an embodiment, the electronic device may predict a next action of the user, based on the context and the main keyword. For example, in case that the searching term is a restaurant name, the electronic device may predict that the user will identify place information, identify restaurant summary information, identify a menu, and make a reservation, as a next action.

According to an embodiment, when the folding state of the electronic device is changed to a state in which only a partial area of the flexible display is activated, the electronic device may display, based on a text included in an execution screen 2610 of an application displayed on the cover display, a list 2620 including at least one application on the activated partial area of the flexible display. According to an embodiment, the list 2620 may include applications related to an action predicted as a next action of the user. For example, the list 2620 may include an item for providing place information and a reservation function, an item for providing restaurant summary information, and an item for providing a review and a menu image.

According to an embodiment, when the folding state of the electronic device is changed to a fully unfolded state in which the entire area of the flexible display is activated after a user input selecting the item 2621 for providing a review and a menu image among the plurality of items included in the list 2620 is received, the electronic device may display an execution screen 2630 of at least one application included in the selected item 2621 in the layout of the selected item 2621. For example, the execution screen 2630 of the at least one application may display an execution screen 2631 of the browser application for providing a review of the searched restaurant on a left display area of the entire area of the flexible display, an execution screen 2632 of an SNS application including a menu image and a menu review on a central display area, and the browser application 2633 for providing a menu image of the searched restaurant on the remaining right display area.

According to an embodiment, an electronic device (e.g., the electronic device 101 in FIG. 1, the electronic device 200 in FIG. 2A, or the electronic device 200 in FIG. 5) may include a foldable housing including a first housing part (e.g., the first housing 210 in FIG. 2A or the first housing 210 in FIG. 2B) including a first side and a second side opposite the first side, a second housing part (e.g., the second housing 220 in FIG. 2A or the second housing 220 in FIG. 2B) including a third side and a fourth side opposite the third side, and a third housing part (e.g., the third housing 230 in FIG. 2A or the third housing 230 in FIG. 2B) including a fifth side and a sixth side opposite the fifth side, a first hinge structure (e.g., the first hinge 270 in FIG. 2B) rotatably connecting the first housing part and the second housing part, a second hinge structure (e.g., the second hinge 280 in FIG. 2B) rotatably connecting the first housing part and the third housing part, a first display (e.g., the display module 160 in FIG. 1 or the display 202 in FIG. 2A) including a first display area (e.g., the first display area 202a in FIG. 2A) disposed on the first side of the first housing part, a second display area (e.g., the second display area 202b in FIG. 2A) disposed on the third side of the second housing part, and a third display area (e.g., the third display area 202c in FIG. 2A) disposed on the fifth side of the third housing part, a second display (e.g., the display module 160 in FIG. 1 or the cover display 203 in FIG. 2B) disposed on at least one of the second side of the first housing part or the fourth side of the second housing part, a sensor module (e.g., the sensor module 176 in FIG. 1) including sensor circuitry, at least one processor (e.g., the processor 120 in FIG. 1), and memory (e.g., the memory 130 in FIG. 1) configured to store instructions.

According to an embodiment, the instructions, when executed by the at least one processor individually or collectively, may cause the electronic device to perform operations.

According to an embodiment, the instructions, when executed by the at least one processor individually or collectively, may cause the electronic device to display an execution screen (e.g., the application execution screen 710 in FIG. 7A, the application execution screen 710 of FIG. 7B, the application execution screen 1210 of FIG. 12, the application execution screen 1610 of FIG. 16, the application execution screen 1710 of FIG. 17, the application execution screen 1810 of FIG. 18, the application execution screen 1910 of FIG. 19, application execution screen 2010 of FIG. 20, application execution screen 2110 of FIG. 21, application execution screen 2210 of FIG. 22, application execution screen 2310 of FIG. 23, application execution screen 2410 of FIG. 24, application execution screen 2510 of FIG. 25, or application execution screen 2610 of FIG. 26) of a first application based on a user input through the second display in first state in which the electronic device is folded.

According to an embodiment, the instructions may, when executed by the at least one processor individually or collectively, cause the electronic device to, while the execution screen of the first application is displayed on the second display, detect that a state of the electronic device is changed from the first state to a second state, based on a sensing value of the sensor module.

According to an embodiment, the instructions, when executed by the at least one processor individually or collectively, may cause the electronic device to display an application list (e.g., the list 740 in FIG. 7B, the list 740 in FIG. 8, the list 1010 or 1020 in FIG. 10, the list 1110 in FIG. 11, the list 1220 in FIG. 12, the list 1620 in FIG. 16, the list 1720 in FIG. 17, the list 1820 in FIG. 18, the list 1920 in FIG. 19, the list 2020 in FIG. 20, the list 2420 in FIG. 24, the list 2520 in FIG. 25, or the list 2620 in FIG. 26.) related to the first application through at least one display area of the first display, based on detecting a state of the electronic device having been changed from the first state to a second state.

According to an embodiment, the instructions, when executed by the at least one processor individually or collectively, may cause the electronic device to receive a user input selecting at least one application (e.g., the at least one application 741 in FIG. 7B, the at least one application 810, 820, 830, or 840 in FIG. 8, the at least one application 1111 or 1112 in FIG. 11, the at least one application 1621 in FIG. 16, the at least one application 1721 in FIG. 17, the at least one application 1821 in FIG. 18, the at least one application 1921 in FIG. 19, the at least one application 2021 in FIG. 20, the at least one application 2421 in FIG. 24, the at least one application 2521 in FIG. 25, or the at least one application 2621 in FIG. 26) from among the application list.

According to an embodiment, the instructions, when executed by the at least one processor individually or collectively, may cause, based on detecting that a state of the electronic device has been changed from the second state to a third state, the electronic device to display an execution screen of the at least one application (e.g., the execution screen 720 or 730 of the at least one application of FIG. 7A, the execution screen 720 or 730 of the at least one application of FIG. 8, the execution screen 1120, 1130, or 1131 of the at least one application of FIG. 11, the execution screen 1630 of the at least one application of FIG. 16, the execution screen 1730 of the at least one application of FIG. 17, the execution screen 1830 of the at least one application of FIG. 18, the execution screen 1930 of the at least one application of FIG. 19, the execution screen 2030 of the at least one application of FIG. 20, the execution screen 2120 of the at least one application of FIG. 21, the execution screen 1120, 1130, or 1131 of the at least one application of FIG. 11, the execution screen 2220 of the at least one application of FIG. 22, the execution screen 2320 of the at least one application of FIG. 23, the execution screen 2430 of the at least one application of FIG. 24, the execution screen 2530 of the at least one application of FIG. 25, or the execution screen 2630 of the at least one application of FIG. 26) in a layout corresponding to the at least one application on the entire area of the fist display.

According to an embodiment, the memory may further include a first artificial intelligence (AI) model trained to obtain, by using texts included in the execution screen of the first application as input data, contexts and keywords of the texts as output data.

According to an embodiment, the instructions may, when executed by the at least one processor individually or collectively, cause the electronic device to predict a plurality of actions, based on the context and the keyword obtained through the first artificial intelligence model.

According to an embodiment, the instructions may, when executed by the at least one processor individually or collectively, cause the electronic device to identify a plurality of applications related to the plurality of actions, respectively.

According to an embodiment, the instructions may, when executed by the at least one processor individually or collectively, cause the electronic device to, in case that a plurality of applications are identified in relation to one of the plurality of actions, identify a priority of the plurality of applications related to the one action based on a usage history of the plurality of applications related to the one action.

According to an embodiment, the instructions may, when executed by the at least one processor individually or collectively, cause the electronic device to include an application having a highest priority in the application list.

According to an embodiment, the instructions may, when executed by the at least one processor individually or collectively, cause the electronic device to identify the plurality of applications by further considering at least one of a time at which a state of the electronic device is changed from the first state to the second state, a location of the electronic device, or whether the electronic device moves.

According to an embodiment, the instructions may, when executed by the at least one processor individually or collectively, cause the electronic device to obtain a plurality of groups including at least one application among a plurality of applications related to the first application.

According to an embodiment, the instructions may, when executed by the at least one processor individually or collectively, cause the electronic device to display the application list allowing selection of one group from among the plurality of groups.

According to an embodiment, the instructions may, when executed by the at least one processor individually or collectively, cause the electronic device to select at least one application included in the one group through the user input selecting the one group.

According to an embodiment, the application list may include a plurality of layouts related to an arrangement of an execution screen of at least one application included in each of the plurality of groups.

According to an embodiment, the memory may further include a second artificial intelligence model trained to obtain the plurality of layouts as output data by using the plurality of applications as input data.

According to an embodiment, the instructions may, when executed by the at least one processor individually or collectively, cause the electronic device to display the plurality of layouts obtained through the second artificial intelligence model in the application list.

According to an embodiment, the instructions may, when executed by the at least one processor individually or collectively, cause the electronic device to determine the plurality of layouts based on a usage history of the plurality of applications.

According to an embodiment, the execution screen of the application displayed on the second display may include an image.

According to an embodiment, the texts may include text data obtained by performing character recognition on the image.

According to an embodiment, a method for controlling an electronic device including a foldable housing including a first housing part including a first side and a second side opposite the first side, a second housing part including a third side and a fourth side opposite the third side, and a third housing part including a fifth side and a sixth side opposite the fifth side, a first display including a first display area disposed on the first side of the first housing part, a second display area disposed on the third side of the second housing part, and a third display area disposed on the fifth side of the third housing part, and a second display disposed on at least one of the second side of the first housing part or the fourth side of the second housing part may include an operation of displaying an execution screen of a first application through the second display based on a user input in a first state in which the electronic device is folded.

According to an embodiment, the method for controlling the electronic device may include an operation of detecting, while the execution screen of the first application is displayed through the second display, that a state of the electronic device is changed from the first state to a second state, based on a sensing value of a sensor module of the electronic device.

According to an embodiment, the method for controlling the electronic device may include an operation of displaying, based on detecting that a state of the electronic device is changed from the first state to the second state, an application list related to the first application through at least one area of the first display.

According to an embodiment, the method for controlling the electronic device may include an operation of receiving a user input for selecting at least one application from the application list.

According to an embodiment, the method for controlling the electronic device may include an operation of displaying, based on detecting that a state of the electronic device is changed from the second state to a third state, an execution screen of the at least one application on the entire area of the first display in a layout corresponding to the at least one application.

According to an embodiment, the memory may further include a first artificial intelligence (AI) model trained to obtain, by using texts included in the execution screen of the first application as input data, contexts and keywords of the texts as output data.

According to an embodiment, in the operation of displaying the application list, it is possible to predict a plurality of actions based on the contexts and the keywords obtained through the first artificial intelligence model.

According to an embodiment, in the operation of displaying the application list, it is possible to identify a plurality of applications respectively related to the plurality of actions.

According to an embodiment, in the operation of displaying the application list, in case that a plurality of applications are identified in relation to one action of the plurality of actions, it is possible to identify a priority of the plurality of applications related to the one action based on a usage history of the plurality of applications related to the one action.

According to an embodiment, in the operation of displaying the application list, it is possible to include an application having a highest priority in the application list.

According to an embodiment, in the operation of identifying the plurality of applications, it is possible to identify the plurality of applications by further considering at least one of a time at which a state of the electronic device is changed from the first state to the second a location of the electronic device, or whether the electronic device moves.

According to an embodiment, in the operation of displaying the application list, it is possible to obtain a plurality of groups including at least one application among a plurality of applications related to the first application.

According to an embodiment, in the operation of displaying the application list, it is possible to display the application list allowing selection of one group among the plurality of groups.

According to an embodiment, in the operation of receiving the user input selecting at least one application, it is possible to select at least one application included in the one group through the user input selecting the one group.

According to an embodiment, the application list may include a plurality of layouts related to an arrangement of an execution screen of at least one application included in each of the plurality of groups.

According to an embodiment, the memory may further include a second artificial intelligence model trained to obtain the plurality of layouts as output data by using the plurality of applications as input data.

According to an embodiment, in the operation of displaying the application list, it is possible to display the plurality of layouts obtained through the second artificial intelligence model in the application list.

According to an embodiment, the electronic device may include an operation of determining the plurality of layouts through a usage history of the plurality of applications.

According to an embodiment, the execution screen of the application displayed on the second display may include an image.

According to an embodiment, the texts may include text data obtained by performing character recognition on the image.

An embodiment may provide a non-transitory computer readable recording medium storing at least one program, wherein the at least one program may include instructions causing an electronic device including a foldable housing including a first housing part including a first side and a second side opposite the first side, a second housing part including a third side and a fourth side opposite the third side, and a third housing part including a fifth side and a sixth side opposite the fifth side, a first display including a first display area disposed on the first side of the first housing part, a second display area disposed on the third side of the second housing part, and a third display area disposed on the fifth side of the third housing part, and a second display disposed on at least one of the second side of the first housing part or the fourth side of the second housing part to display an execution screen of a first application on the second display based on a user input in a first state in which the electronic device is folded.

According to an embodiment, the at least one program may include instructions causing the electronic device to detect, while the execution screen of the first application is displayed through the second display, that a state of the electronic device is changed from the first state to a second state, based on a sensing value of a sensor module of the electronic device.

According to an embodiment, the at least one program may include instructions causing the electronic device to display, based on detecting that a state of the electronic device is changed from the first state to the second state, an application list related to the first application through at least one area of the first display.

According to an embodiment, the at least one program may include instructions causing the electronic device to receive a user input for selecting at least one application from the application list.

According to an embodiment, the at least one program may include instructions causing the electronic device to display, based on detecting that a state of the electronic device is changed from the second state to a third state, an execution screen of the at least one application on the entire area of the first display in a layout corresponding to the at least one application.

According to an embodiment, the at least one program may include instructions causing the electronic device to predict a plurality of actions based on a context and a keyword obtained through the first artificial intelligence model trained to obtain, by using texts included in the execution screen of the first application as input data, the context and the keyword of the texts as output data.

According to an embodiment, the at least one program may include instructions causing the electronic device to identify a plurality of applications respectively related to the plurality of actions.

According to an embodiment, the at least one program may include instructions causing the electronic device to, in case that a plurality of applications are identified in relation to one action of the plurality of actions, identify a priority of the plurality of applications related to the one action based on a usage history of the plurality of applications related to the one action.

According to an embodiment, the at least one program may include instructions causing the electronic device to include an application having a highest priority in the list.

According to an embodiment, the at least one program may include instructions causing the electronic device to identify the plurality of applications by further considering at least one of a time at which a state of the electronic device is changed from the first state to the second state, a location of the electronic device or whether the electronic device moves.

According to an embodiment, the at least one program may include instructions causing the electronic device to obtain a plurality of groups including at least one application among a plurality of applications related to the first application.

According to an embodiment, the at least one program may include instructions causing the electronic device to display the application list allowing selection of one group among the plurality of groups.

According to an embodiment, the at least one program may include instructions causing the electronic device to select at least one application included in the one group through the user input selecting the one group.

According to an embodiment, the application list may include a plurality of layouts related to an arrangement of an execution screen of at least one application included in each of the plurality of groups.

According to an embodiment, the at least one program may include instructions causing the electronic device to display, in the application list, the plurality of layouts obtained through a second artificial intelligence model trained to obtain the plurality of layouts as output data by using the plurality of applications as input data.

According to an embodiment, the at least one program may include instructions causing the electronic device to determine the plurality of layouts through a usage history of the plurality of applications.

According to an embodiment, the execution screen of the application displayed on the second display may include an image.

According to an embodiment, the texts may include text data obtained by performing character recognition on the image.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200), comprising:
a foldable housing including a first housing part (210) including a first side and a second side opposite the first side, a second housing part (220) including a third side and a fourth side opposite the third side, and a third housing part (230) including a fifth side and a sixth side opposite the fifth side;
a first hinge structure (270) rotatably connecting the first housing part and the second housing part;
a second hinge structure (280) rotatably connecting the first housing part and the third housing part;
a first display (160, 202) including a first display area (202a) disposed in the first side of the first housing part, a second display area (202b) disposed in the third side of the second housing part, and a third display area (202c) disposed in the fifth side of the third housing part;
a second display (160, 203) disposed in at least one of the second side of the first housing part or the fourth side of the second housing part;
a sensor module (176) comprising sensor circuitry;
at least one processor (120); and
memory (130) storing instructions,
wherein the instructions, when executed by the at least one processor individually or collectively, cause the electronic device to:
in a first state when the electronic device is folded, display an execution screen (710, 1210, 1610, 1710, 1810, 1910, 2010, 2110, 2210, 2310, 2410, 2510, 2610) of a first application on the second display based on a user input,
while the execution screen of the first application is displayed on the second display, detect that a folding state of the electronic device is changed from the first state to a second state, based on a sensing value of the sensor module,
based on detecting that a folding state of the electronic device is changed from the first state to the second state, display an application list (740, 1010, 1020, 1110, 1220, 1620, 1720, 1820, 1920, 2020, 2420, 2520, 2620) related to the first application through at least one area of the first display,
receive a user input for selecting at least one application (741, 810, 820, 830, 840, 1111, 1112, 1621, 1721, 1821, 1921, 2021, 1421, 2521, 2621) among the application list, and
based on detecting that a folding state of the electronic device is changed from the second state to a third state, display an execution screen (720, 730, 1120, 1130, 1131, 1630, 1730, 1830, 1930, 2030, 2120, 2220, 2320, 2430, 2530, 2630) of the at least one application on the entire area of the first display in a layout corresponding to the at least one application.

2. The electronic device of claim 1,
wherein the memory includes
a first artificial intelligence (AI) model trained to obtain, by using text included in the execution screen of the first application as input data, contexts and keywords of the text as output data,
wherein the instructions, when executed by the at least one processor individually or collectively, cause the electronic device to:
predict a plurality of actions based on the contexts and the keywords obtained through the first artificial intelligence model, and
identify a plurality of applications related to the plurality of actions, respectively.

3. The electronic device of claim 2,
wherein the instructions, when executed by the at least one processor individually or collectively, cause the electronic device to:
when a plurality of applications, related to one action of the plurality of actions, are identified, identify a priority of the plurality of applications related to the one action based on usage history of application(s) related to the one action, and
include an application having the highest priority in the application list.

4. The electronic device of claim 2 or 3,
wherein the instructions, when executed by the at least one processor individually or collectively, cause the electronic device to:
identify the plurality of applications by further considering at least one of a time at which a folding state of the electronic device is changed from the first state to the second state, a location of the electronic device or whether the electronic device moves.

5. The electronic device of one of claims 1 to 4,
wherein the instructions, when executed by the at least one processor individually or collectively, cause the electronic device to:
obtain a plurality of groups including at least one application among a plurality of applications related to the first application,
display the application list for selecting one group from among the plurality of groups, and
select at least one application included in the one group through the user input for selecting the one group.

6. The electronic device of claim 5,
wherein the application list includes a plurality of layouts related to an arrangement of an execution screen of at least one application included in each of the plurality of groups.

7. The electronic device of claim 6,
wherein the memory further includes
a second artificial intelligence model trained to obtain the plurality of layouts as output data using the plurality of applications as input data,
wherein the instructions, when executed by the at least one processor individually or collectively, cause the electronic device to:
display the plurality of layouts obtained through the second artificial intelligence model in the application list.

8. The method of claim 6 or 7, comprising:
wherein the instructions, when executed by the at least one processor individually or collectively, cause the electronic device to:
determine the plurality of layouts based on usage history of the plurality of applications.

9. The electronic device of any one of claims 2 to 8,
wherein the execution screen of the application displayed on the second display includes an image, and
wherein the text includes text data obtained by performing character recognition operation on the image.

10. A method for controlling an electronic device comprising a foldable housing comprising a first housing part comprising a first side and a second side opposite the first side, a second housing part comprising a third side and a fourth side opposite the third side, and a third housing part comprising a fifth side and a sixth side opposite the fifth side, a first display comprising a first display area disposed on the first side of the first housing part, a second display area disposed on the third side of the second housing part, and a third display area disposed on the fifth side of the third housing part, and a second display disposed on at least one of the second side of the first housing part or the fourth side of the second housing part, the method comprising:
displaying an execution screen of a first application through the second display based on a user input in a first state in which the electronic device is folded;
while the execution screen of the first application is displayed through the second display, detecting that a folding state of the electronic device is changed from the first state to a second state, based on a sensing value of a sensor module of the electronic device;
displaying, based on detecting that a folding state of the electronic device is changed from the first state to the second state, an application list related to the first application through at least one area of the first display;
receiving a user input selecting at least one application among the application list; and
displaying, based on detecting that a folding state of the electronic device is changed from the second state to a third state, an execution screen of the at least one application on an entire area of the first display in a layout corresponding to the at least one application.

11. The method of claim 10, wherein memory of the electronic device further comprises a first artificial intelligence model trained to obtain, by using texts included in the execution screen of the first application as input data, a context and a keyword of the texts as output data, and
wherein the displaying of the application list comprises:
predicting a plurality of actions based on the context and the keyword obtained through the first artificial intelligence model; and
identifying a plurality of applications related to the plurality of actions, respectively.

12. The method of claim 11, wherein the displaying of the application list comprises:
in case that a plurality of applications have been identified in relation to one action of the plurality of actions, identifying a priority of the plurality of applications related to the one action based on a usage history of application(s) related to the one action, and
including an application having the highest priority in the application list.

13. The method of claim 11 or 12, wherein the identifying of the plurality of applications comprises identifying the plurality of applications by further considering at least one of a time at which a folding state of the electronic device is changed from the first state to the second state, a location of the electronic device, or whether the electronic device moves.

14. The method of one of claims 10 to 13, wherein the displaying of the application list comprises:
obtaining a plurality of groups comprising at least one application among a plurality of applications related to the first application; and
displaying the application list allowing selection of one group from among the plurality of groups, and
wherein the receiving of the user input selecting at least one application comprises selecting at least one application included in the one group through the user input selecting the one group.

15. The method of claim 14, wherein the application list comprises a plurality of layouts related to an arrangement of an execution screen of at least one application included in each of the plurality of groups.
